(19) Europäisches Patentamt
European Patent Office
Office européen des brevets

(11) EP 1 768 120 A2

# (12) EUROPEAN PATENT APPLICATION

(43) Date of publication:
**28.03.2007 Bulletin 2007/13**

(51) Int Cl.:
***G11B 7/24*** *(2006.01)*

(21) Application number: **06254773.2**

(22) Date of filing: **13.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **14.09.2005 JP 2005267419**

(71) Applicant: **FUJIFILM Corporation**
**Minato-ku**
**Tokyo (JP)**
Designated Contracting States:
**DE FR GB**

(72) Inventors:
- **Nagate, Hiroshi**
**Fujinomiya-shi**
**Shizuoka (JP)**
- **Yanagihara, Naoto**
**Fujinomiya-shi**
**Shizuoka (JP)**

(74) Representative: **Stevens, Jason Paul**
**Frank B. Dehn & Co.**
**St Bride's House**
**10 Salisbury Square**
**London EC4Y 8JD (GB)**

## (54) Optical recording medium and production method thereof, and optical recording apparatus and optical reproducing apparatus

(57) An optical recording medium includes a servo substrate (1) formed so that at least servo information is capable of being detected, a first recording layer (4) in which information is recorded by holography, a first top substrate (5), a first gap layer $G_1$ (8), a first gap layer $G_2$ (7), a first filter layer (6), a second recording layer (4a), a second top substrate (5a), a second gap layer $G_1$ (8a), a second gap layer $G_2$ (7a), and a second filter layer (6a), wherein the first recording layer (4), the first top substrate (5), the first gap layer $G_1$ (8), the first gap layer $G_2$ (7), and the first filter layer (6) are arranged on one surface side of the servo substrate (1) and the second recording layer (4a), the second top substrate (5a), the second gap layer $G_1$ (8a), the second gap layer $G_2$ (7a), and the second filter layer (6a) are arranged on the other surface side of the servo substrate.

FIG. 4

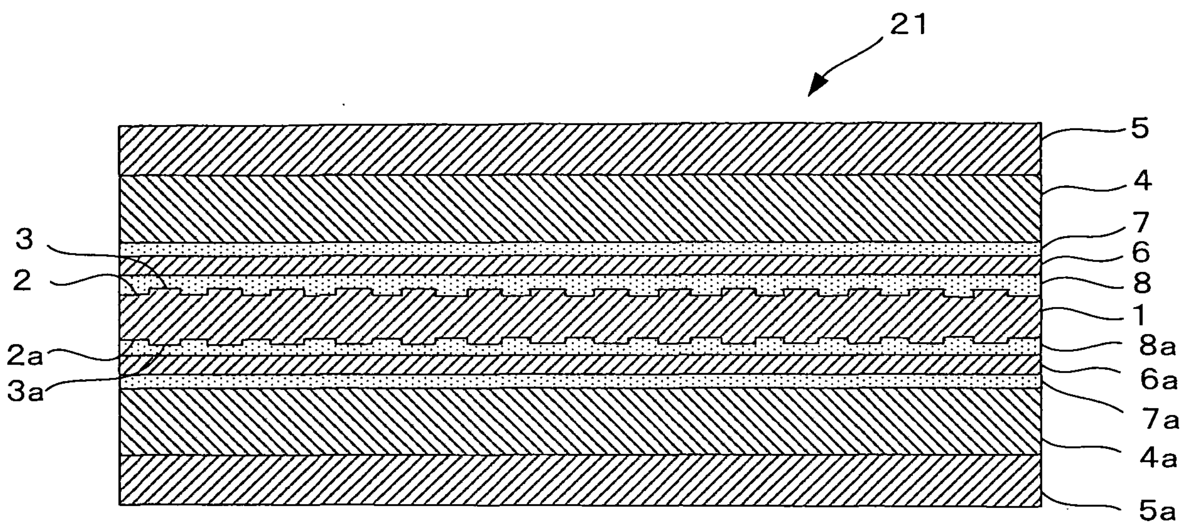


EP 1 768 120 A2

**Description**

BACKGROUND OF THE INVENTION

Field of the Invention

The present invention relates to an optical recording medium, in which information is recorded by holography, and production method thereof, and relates to an optical recording apparatus and optical reproducing apparatus.

Description of the Related Art

An optical recording medium is one of the recording media into which large information can be written. Among the optical recording media, for example, rewritable optical recording media such as a magnetic optical disc and phase change optical disc, and write-once optical recording media such as CD-R have been put into practice; however, further large-capacity optical recording media have been demanded.

Conventional optical recording media record information two-dimensionally. Thus, there is a limitation in increasing the recording capacity. Therefore, in recent years, attention has been made in a holographic optical recording method in which information can be recorded three-dimensionally.

In the holographic optical recording method, generally, information light with a two-dimensional intensity distribution and reference light with an intensity level equal to that of the information light are superimposed inside a photosensitive recording layer to form an interference image, and an optical characteristic distribution is created by means of the interference image, whereby information is recorded in the recording layer. Meanwhile, when reading (reproducing) written information, only reference light is applied onto the recording layer from the same direction, thereby allowing a diffracted ray that has an intensity distribution corresponding to the optical characteristic distribution formed in the recording layer to be emitted from the recording layer.

In this holographic optical recording method, optical characteristic distribution is formed three-dimensionally in the recording layer, and thus it is possible to partially superimpose a region into which information has been written by one information light and a region into which information has been written by another information light, namely, enabling multiplexing recording, which matches to a demand for large-capacity optical recording media. When digital volume holography is utilized in such multiplexing recording, the signal to noise ratio (S/N ratio) at one spot becomes extremely high. Thus, the resulting hologram type optical recording medium can reproduce the original information correctly even if the S/ N ratio is lowered in some degree due to overwriting. As a result, the number of multiplexing recording reaches as many as several hundred times, enabling a remarkable increase of the recording capacity of optical recording medium (see, Japanese Patent Application Laid-Open (JP-A) No. 2002-123949).

As a such hologram type optical recording medium, for example, an optical recording medium 20 is proposed that comprises a servo substrate 1 provided with a servo pit pattern 3 on the surface thereof, a reflective film 2 made of e.g. aluminum on the surface of the servo pit pattern 3, a recording layer 4 on the reflective film 2, and a top substrate 5 on the recording layer 4, as shown in FIG.1 (JP-A No. 11-311936).

Further, JP-A No. 2004-265472 discloses an improved optical recording medium 20a for achieving efficient recording by means of the information light and reference light, in which a gap layer $G_1$ 8 for smoothing the surface of the servo substrate 1 and adjusting the size of holograms formed in the recording layer, a filter layer 6 for selectively reflecting only the lights with wavelength of the information light or reference light, and a quarter wave plate 9 are formed between a servo substrate 1 and a recording layer 4 as shown in FIG. 2.

In addition, a variety of proposals have been made in order to increase the recording capacity of such optical recording medium. For example, JP-A No. 2004-303319 discloses a composition for optical recording in which chalcogenide glass and metal particles are used. Irradiation with light changes optical characteristics and makes difference in optical transmittance between the irradiated sections and non-irradiated sections. Use of the difference in optical transmittance enables high multiplexing recording, thereby achieving the increase of recording capacity. Further, JP-A No. 2001-147634 discloses a multiplexing recording method in which incident angles of information light and reference light are changed and information is sequentially recorded in different regions of a recording layer. Such method using the change of incident angle enables high multiplexing recording, thereby achieving the increase of recording capacity.

However, in either case, a recording layer or the like is formed only on one side of the substrate in the optical recording medium and both recording and reproducing are performed by applying light from the foregoing side of the substrate. Thus, in case of optical recording medium having a recording layer formed only on one side, the capacity to record holograms is limited to a certain level. Even if improvement on high multiplexing recording to the recording layer formed only on one side has been made, recording capacity is limited.

SUMMARY OF THE INVENTION

An object of the invention is to solve conventional problems mentioned above and to achieve the following objects. Specifically, an object of the invention is to provide an optical recording medium which can achieve doubled recording capacity on the optical recording medium including a recording layer for recording information by holography and which is high quality, and a method for producing an optical recording medium that can produce such optical recording medium efficiently; and to provide an optical recording apparatus and optical reproducing apparatus that are compatible with the optical recording medium.

Means for solving the above-mentioned problems are as follows. Specifically, the optical recording medium of the invention includes a servo substrate formed so that at least servo information is capable of being detected, a first recording layer in which information is recorded by holography, a first top substrate, a first gap layer $G_1$, a first gap layer $G_2$, a first filter layer, a second recording layer, a second top substrate, a second gap layer $G_1$, a second gap layer $G_2$, and a second filter layer, wherein the first recording layer, the first top substrate, the first gap layer $G_1$, the first gap layer $G_2$, and the first filter layer are arranged on one surface side of the servo substrate, and the second recording layer, the second top substrate, the second gap layer $G_1$, the second gap layer $G_2$, and the second filter layer are arranged on the other surface side of the servo substrate.

The optical recording method of the invention includes applying information light and reference light onto the optical recording medium of the invention in such a way that the optical axis of the information light is collinear with that of the reference light.

The method for producing an optical recording medium of the invention is a method for producing the optical recording medium of the invention and includes forming a gap layer $G_1$ on each of one surface and the other surface of a servo substrate, forming a filter layer on the gap layer $G_1$, forming a gap layer $G_2$ on the filter layer, forming a recording layer on the gap layer $G_2$, and forming a top substrate on the recording layer.

The optical recording apparatus of the invention includes a focal distance-detecting unit configured to apply servo light onto one side of the optical recording medium of the invention and to detect a focal distance representing the distance between the focus of the servo light and a collective lens, a focal distance-controlling unit configured to control the focal distances along an optical axis direction of information light and reference light based on the detected focal distance of the servo light, an interference image-recording unit configured to create interference images by applying the information light and the reference light to thereby record the interference images on a recording layer, and a medium-reversing unit configured to reverse the optical recording medium upside down such that information is capable of being recorded by means of the interference image-recording unit on a recording layer on the side opposite to that of the recording layer on which the interference images have been recorded by the interference image-recording unit.

The optical reproducing apparatus of the invention includes a focal distance-detecting unit configured to apply servo light onto one side of the optical recording medium and to detect a focal distance representing the distance between the focus of the servo light and a collective lens, a focal distance-controlling unit configured to control the focal distance along an optical axis direction of reproduction light, the same as reference light used for recording based on the detected focal distance of the servo light, an interference image-reproducing unit configured to reproduce recorded interference images by applying the reproduction light, and a medium-reversing unit configured to reverse the optical recording medium upside down such that information is capable of being reproduced by means of the interference image-reproducing unit from a recording layer on the side opposite to that of the recording layer from which the interference images have been reproduced by the interference image-reproducing unit.

The optical reproducing method of the invention includes applying reproduction light, the same as the reference light, onto an interference image to reproduce recorded information corresponding to the interference image, wherein the interference image is formed in a recording layer by means of the optical recording method of the invention.

BRIEF DESCRIPTION OF THE DRAWINGS

FIG. 1 is a schematic cross-sectional view showing the structure of a conventional optical recording medium.

FIG. 2 is a schematic cross-sectional view showing the structure of a conventional optical recording medium.

FIG. 3 is a partial cross-sectional view showing an example of the layer structure of the optical recording medium of the invention.

FIG. 4 is a schematic cross-sectional view showing an example of the optical recording medium of the specific example 1 of the invention.

FIG. 5 is a schematic cross-sectional view showing an example of the optical recording medium according to the specific example 2 of the invention.

FIG. 6 is a schematic cross-sectional view showing an example of the optical recording medium according to the

specific example 3 of the invention.

FIG. 7 is a graph showing reflection characteristics of a filter, which is a laminate of three cholesteric liquid crystal layers, for incident light from the vertical direction (0°).

FIG. 8 is an explanatory diagram showing an example of the optical system around the optical recording medium according to the invention.

FIG. 9 is a block diagram showing an example of the entire configuration of the optical recording and reproducing apparatus according to the invention.

FIG. 10 is a partially perspective view showing an example of the medium-reversing mechanism for reversing the optical recording medium of the invention.

FIG. 11 is a partially perspective view showing an example of the medium-reversing mechanism for reversing the optical recording medium of the invention.

FIG. 12 is a cross-sectional view showing the first form of the recording layer disposing step of the invention.

FIG. 13 is a cross-sectional view showing the first form of the recording layer disposing step of the invention.

FIG. 14 is a cross-sectional view showing the first form of the recording layer disposing step of the invention.

FIG. 15 is a cross-sectional view showing the first form of the recording layer disposing step of the invention.

FIG. 16 is a cross-sectional view showing the second form of the recording layer disposing step of the invention.

FIG. 17 is a cross-sectional view showing the second form of the recording layer disposing step of the invention.

FIG. 18 is a cross-sectional view showing the second form of the recording layer disposing step of the invention.

FIG. 19 is a cross-sectional view showing the second form of the recording layer disposing step of the invention.

DESCRIPTION OF THE PREFERRED EMBODIMENTS

(Optical recording medium)

The optical recording medium of the invention comprises a servo substrate formed so that at least servo information is capable of being detected, on one surface side of the servo substrate, a first recording layer in which information is recorded by holography, a first top substrate, a first gap layer $G_1$, a first gap layer $G_2$, a first filter layer, on the other surface side of the servo substrate, a second recording layer, a second top substrate, a second gap layer $G_1$, a second gap layer $G_2$, and a second filter layer; and may further comprise additional layers on an as-needed basis. In addition, the optical recording medium of the invention is used for an optical recording method (collinear technology) in which the information light and reference light are applied in such a way that the optical axis of the information light is collinear with that of the reference light.

<Servo substrate>

The servo substrate is arranged at the center of the optical recording medium, and on each side of the servo substrate, a gap layer $G_2$, filter layer, gap layer $G_1$, recording layer, and top substrate are disposed. In addition, information about irradiating position of the information light and reference light, the information being used for recording information in an optical recording medium, is formed on the surface of the servo substrate and besides, the servo substrate has a function as a support serving as a member for mechanical strength of the optical recording medium.

The structure of the servo substrate is not particularly limited and can be appropriately selected depending on the intended purpose. For example, the structure of the servo substrate may be a single structure, i.e., a structure consisting of a single member or may be joined structure consisting of two or more members such as a substrate. Among these, the servo substrate preferably has a single structure in terms of productivity and cost.

Examples of the shape of the servo substrate includes a disc shape and card-like shape, and shape that can ensure the mechanical strength of the resultant optical recording medium needs to be selected. Preferably, the servo substrate has the same outer shape as the top substrate.

For the material of the servo substrate, when light for recording and reproduction is incident through the substrate, the substrate needs to be transparent enough to admit such light of desired wavelengths. Glass, ceramics, resins and the like are generally used; however, resin is most preferable in view of the formability and cost.

Examples of the resins include polycarbonate resins, acrylic resins, epoxy resins, polystyrene resins, acrylonitrile-styrene copolymers, polyethylene resins, polypropylene resins, silicone resins, fluorine resins, ABS resins and urethane resins. Among these, polycarbonate resins and acrylic resins are most preferable in view of their formability, optical characteristics, and costs.

The servo substrate may be either a freshly prepared one or a commercially available one, which is also true for the top substrate.

The information about irradiating position of light formed on the servo substrate is not particularly limited and can be appropriately selected depending on the intended purpose; examples thereof include tracking information, focus

information, address information, and information on disc condition.

Examples of the tracking information include wobble pits, wobble grooves, and tracking pits.

Examples of the focus information include reflective films formed on the surface of the servo substrate, mirrors for focus, and focus pits.

Examples of the address information include concave-convex formed on the wobble pit, encoded pit arrays, and wobble modulated signals.

Each information may be formed in a combined way. For example, multiple numbers of address-servo areas - addressing areas linearly extending in the radial direction of the substrate - are provided on the substrate at given angles to one another, and each fan-shaped area between adjacent address-servo areas serves as a data area. In the address-servo areas, information for performing a focus servo operation and a tracking servo operation by means of a sampled servo system and address information are previously recorded (or pre-formatted) in the form of emboss pits (servo pits).

Preferably, the servo pit pattern is formed on at least one of one surface and the other surface of the servo substrate.

There is no need to provide a servo pit pattern in a case where the optical recording medium is a card-like shape.

The size of the servo substrate is not particularly limited and can be appropriately set depending on the intended purpose. For example, when the servo substrate has a disc shape, the diameter thereof is preferably 50 mm to 300 mm, more preferably 80 mm to 130 mm, most preferably 120 mm to 130 mm.

If the diameter is less than 50 mm, a recording area is too close to a clamp area, making it impossible for a recording/reproduction head to access to an inner circumferential portion in some cases. If the diameter is more than 300 mm, rotary torque is too large, making fast access impossible in some cases.

When the servo substrate has a card-like shape, the size thereof is preferably 10 mm to 100 mm $\times$ 10 mm to 100 mm.

The thickness of the servo substrate is not particularly limited and can be appropriately set depending on the intended purpose; the thickness is preferably 0.1 mm to 5 mm, more preferably 0.3 mm to 2 mm. If the thickness of the servo substrate is less than 0.1 mm, the optical disc may become deformed during storage. If the thickness is greater than 5 mm, the weight of the optical disc is increased and excess load may be imposed on a drive motor.

The reflective film may be formed on the surface of the servo pit pattern of the servo substrate.

For the material of the reflective film, materials that offer high reflectivity to recording light and reference light are preferable. When the wavelength of light to be adopted is 400 nm to 780 nm, Al, Al alloys, Ag, Ag alloys and the like are preferably used. When the wavelength of light to be adopted is 650 nm or more, Al, Al alloys, Ag. Ag alloys, Au, Cu alloys, TiN and the like are preferably used.

By using an optical recording medium which reflects light by a reflective film and can record or erase information - for example, DVD (Digital Versatile (Video) Disc), directory information indicative of the locations where information has been recorded, the time when information has been recorded, and the locations where errors have occurred and how information has been re-recorded on spare areas can also be recorded on, and erased from the optical recording medium without adversely affecting holograms.

The method for forming the reflective film is not particularly limited and can be appropriately selected depending on the intended purpose; examples thereof include various types of vapor deposition, such as vacuum vapor deposition, sputtering, plasma CVD, photo CVD, ion plating, and electron beam vapor deposition. Among these, sputtering is most preferable in view of mass productivity, film quality, and the like.

The thickness of the reflective film is preferably 50 nm or more, more preferably 100 nm or more, in order to secure sufficient reflectivity.

<First and second top substrates>

The first and second top substrates (hereinafter, may be simply referred to as "top substrate") are arranged facing the servo substrate and are positioned as the outermost layer of the optical recording medium. The first and second top substrates serve as a protective member of a recording layer and other layers of the optical recording medium and have a function as a support serving as a member for providing mechanical strength.

The structure of the top substrate is not particularly limited and can be appropriately selected depending on the intended purpose. For example, the structure of the top substrate may be a single structure, i.e., a structure consisting of a single member or may be joined structure consisting of two or more members such as a substrate. Among these, the top substrate preferably has a single structure in terms of productivity and cost.

Examples of the shape of the top substrate includes a disc shape and card-like shape, and shape that can ensure the mechanical strength of the resultant optical recording medium needs to be selected. Preferably, the top substrate has the same outer shape as the servo substrate.

The size of the top substrate is not particularly limited and can be appropriately set depending on the intended

purpose. For example, when the top substrate has a disc shape, the diameter thereof is preferably 50 mm to 300 mm, more preferably 80 mm to 130 mm, most preferably 120 mm to 130 mm.

If the diameter is less than 50 mm, a recording area is too close to a clamp area, making it impossible for a recording/reproduction head to access to an inner circumferential portion in some cases. If the diameter is more than 300 mm, rotary torque is too large, making fast access impossible in some cases.

When the top substrate has a card-like shape, the size thereof is preferably 10 mm to 100 mm $\times$ 10 mm to 100 mm.

For the material of the top substrate, when light for recording and reproduction is incident through the substrate, the substrate needs to be transparent enough to admit such light of desired wavelengths, but the material for the top substrate can be appropriately selected depending on the intended purpose. For example, inorganic and organic materials can be suitably used.

Examples of the inorganic materials include glass, quartz and silicon.

Examples of the organic materials include acetate resins such as triacetylcellulose, polyester resins, polyethersulfone resins, polysulfone resins, polycarbonate resins, polyamide resins, polyimide resins, polyolefin resins, acrylic resins, polynorbornene resins, cellulose resins, polyarylate resins, polystyrene resins, polyvinylalcohol resins, polyvinyl chloride resins, polyvinylidene chloride resins, polyacrylic resins, polylactate resins, plastic film laminate paper and synthetic paper. These may be used singly or in combination. Among these, polycarbonate resins and acrylic resins are preferable in light of their formability, peeling properties, and costs.

The resin used in the servo substrate may be used as the resin in the top substrate.

As in the case of the servo substrate, the top substrate may be either a freshly prepared one or a commercially available one.

The thickness of the top substrate is not particularly limited and can be appropriately set depending on the intended purpose; the thickness is preferably 5 μm to 1,200 μm, more preferably 100 μm to 700 μm. If the thickness of the top substrate is less than 5 μm, the top substrate may not serve to protect the recording layer sufficiently. If the thickness is greater than 1,200 μm, the distance from disc surface to the recording layer or to the layer where a pit is formed increases and thus the focal distances of light for recording and reproduction may be too long.

<First recording layer and second recording layer>

The first recording layer and the second recording layer (hereinafter, may be simply referred to as "recording layer") are layers in which information can be recorded by holography. Materials that can undergo changes in their optical characteristics (e.g., absorption index and/or refractive index) upon irradiation with electromagnetic rays with predetermined wavelength are used.

The material for the recording layer is not particularly limited and can be appropriately selected depending on the intended purpose; examples thereof include (1) photopolymers to be highly-polymerized as a result of polymerization reaction upon irradiation with light (2) photorefractive materials that offer a photorefractive effect - an effect that a space-charge distribution is generated as a result of light irradiation, and the refractive index is altered), (3) photochromic materials that undergo changes in refractive index upon irradiation with light, caused by isomerization of their molecules, (4) inorganic materials such as lithium niobate, and barium titanate, and (5) chalcogen materials. Among these, photopolymers (1) are most preferable.

The photopolymer (1) is not particularly limited and can be appropriately selected depending on the intended use. For example, the photopolymer contains a monomer and a photoinitiator and further contains additional components such as a sensitizer and/or oligomers on an as-needed basis.

For the photopolymer, for example, those described in the following can be used: "Photopolymer Handbook" (published by Kogyo Chosakai Publishing Inc., 1989), "Photopolymer Technology" (published by THE NIKKAN KOGYO SHIMBUN LTD., 1989), SPIE Journals and Proceedings Vol. 3010 on pp 354-372 (1997), and SPIE Journals and Proceedings Vol. 3291 pp 89-103 (1998). In addition, it is also possible to use the photopolymers described in U.S. Patent Nos. 5,759,721, 4,942,112, 4,959,284, and 6,221,536,; International Publication Nos. WO/97/44714, 97/13183, 99/26112, and 97/13183; Japanese Patent (JP-B) Nos. 2880342, 2873126, 2849021, 3057082, and 3161230; and JP-A Nos. 2001-316416 and 2000-275859.

Examples of the method for applying recording light to the photopolymer to change the optical properties thereof include a method utilizing diffusion of low-molecular components. In addition, in order to mitigate change in volume of the photopolymer at the time of polymerization, a component that diffuses in the direction opposite to the direction in which polymerized components are diffused may be added, or a compound having a structure that breaks up by treatment with acids may be added in addition to polymers. When the recording layer is formed using a photopolymer containing the low-molecular component, the recording layer may need a structure that can retain liquid therein. Moreover, when the compound having a structure that breaks up by treatment with acids is added, the change in volume of the photopolymer may be constrained by counterbalancing expansion caused by the structure break up and shrinkage caused by

polymerization of monomers.

-Monomer-

The monomer is not particularly limited can be appropriately selected in depending on the intended use; examples thereof include radical polymerizable monomers having a unsaturated bond such as acrylic group and methacrylic group, and cationic polymerizable monomers having an ether structure such as epoxy ring and oxetane ring. Each of these monomers may be monofunctional or polyfunctional. Photocrosslinking monomers may also be used.

Examples of the radical polymerizable monomer include acryloylmorpholine, phenoxyethylacrylate, isobonylacrylate, 2-hydroxypropylacrylate, 2-ethylhexylacrylate, 1,6-hexanedioldiacrylate, tripopyleneglycol diacrylate, neopentylglycol PO-modified diacrylate, 1,9-nonanedioldiacrylate, hydroxy pivalic acid neopentylglycol diacrylate, EO-modified bisphenol A diacrylate, polyethyleneglycol diacrylate, pentaerythritol triacrylate, pentaerythritol tetraacrylate, pentaerythritol hexaacrylate, EO-modified glycerol triacrylate, trimethylol propane triacrylate, EO-modified trimethylol propane triacrylate, 2-naphtho-1-oxyethyl acrylate, 2-carbazoil-9-ethylacryate, (trimethylsilyloxy) dimethylsilylpropyl acrylate, vinyl-1-naphthoate, and N-vinyl carbazole.

Examples of the cationic polymerizable monomer include bisphenol A epoxy resins, phenol novolac epoxy resins, glycerol triglycidyl ether, 1,6-hexane glycidyl ether, vinyltrimethoxysilane, 4-vinylphenyl trimethoxysilane, γ-methacryroxypropyl triethoxysilane, and compounds represented by the following formulas (A) to (E).

These monomers may be used singly or in combination.

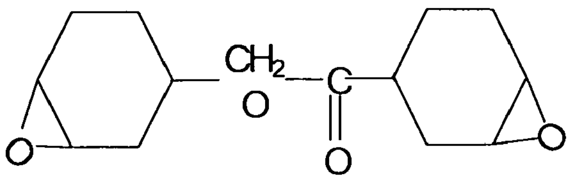

Structural Formula (A)

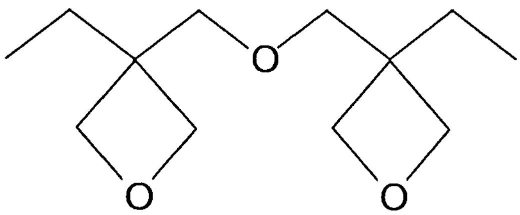

Structural Formula (B)

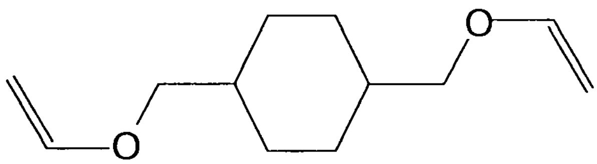

Structural Formula (C)

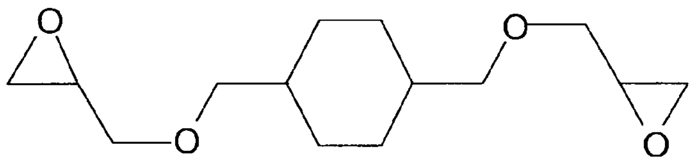

Structural Formula (D)

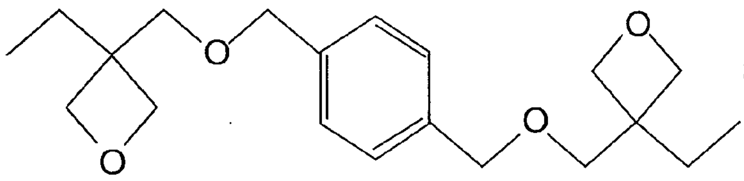

Structural Formula (E)

The photoinitiator is not particularly limited as long as it is sensitive to recording light, and examples thereof include materials that can trigger radical polymerization, cationic polymerization, and crosslinking reactions by irradiation with light.

Examples of the photoinitiator include 2,2'-bis(o-chlorophenyl)-4, 4', 5, 5'-tetraphenyl-1, 1'-biimidazole, 2, 4, 6-tris(trichloromethyl)-1, 3, 5-triazine, 2, 4-bis (trichloromethyl)-6-(p-methoxyphenylvinyl)-1, 3, 5-triazine, diphenyl iodonium tetrafluoroborate, diphenyl iodonium hexafluorophosphate, 4, 4'-di-t-butylphenyl iodonium tetrafluoroborate, 4-diethylaminophenylbenzene diazonium hexafluorophotophate, benzoin, 2-hydroxy-2-methyl-1-phenylpropane-2-one, benzophenon, thioxanthone, 2, 4, 6-trimethyl benzoyl diphenyl acyl phosphine oxide, triphenyl butylborate tetraethylammonium, and titanocene compounds represented by the following formula. These photoinitiators may be used singly or in combination. In addition, sensitizing dyes may be used together with the photoinitiator, depending on the wavelength of light to be applied.

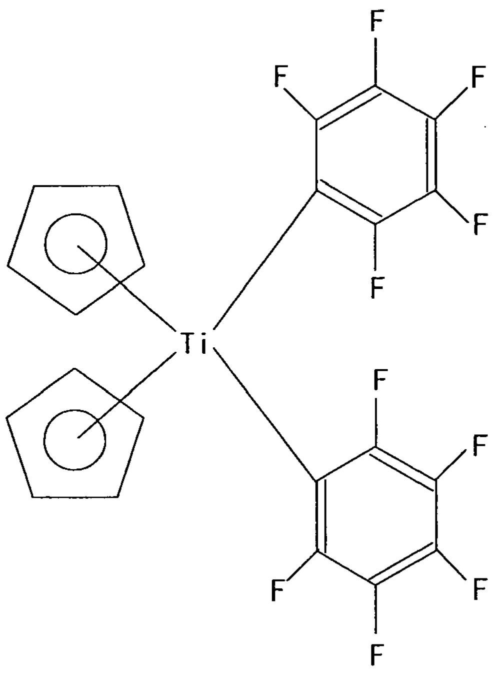

The photopolymer can be obtained by mixing the monomer, the photoinitiator, and other components in accordance with the necessity to allow them to react with one another.

The photorefractive materials (2) are not particularly limited as long as they offer a photorefractive effect, and can be appropriately selected depending on the intended purpose. For example, the photorefractive materials contain charge generating material and charge transporting material, and further contain additional components on an as-needed basis.

The charge generating material is not particularly limited and can be appropriately selected depending on the intended purpose; examples thereof include phthalocyanine dyes or pigments such as metallophthalocyanine, metal-free phthalocyanine and derivatives thereof; naphthalocyanine dyes or pigments; azo dyes or pigments such as monoazo , disazo and trisazo dyes and pigments; pelylene dyes or pigments; indigo dyes or pigments; quinacridone dyes or pigments; polycyclic quinone dyes or pigments such as anthraquinones, and Anthanthron; cyanine dyes or pigments; charge-transfer complexes comprising an electron-accepting substance and an electron-donating substance as typified by TTF-TCNQ; azulenium salts; fullerenes as typified by $C_{60}$ and $C_{70}$ and metanofullerenes, derivatives of fullenerens. These charge generating materials may be used singly or in combination.

The charge transporting material is material carrying holes or electrons, and may be a low-molecular compound or a high-molecular compound.

The charge transporting material is not particularly limited and can be appropriately selected depending on the intended purpose; examples thereof include nitrogen-containing cyclic compounds such as indoles, carbazoles, oxazoles, inoxazoles, thiazoles, imidazoles, pyrazoles, oxadiazoles, pyrazolines, thiadiazoles and triazoles or derivatives thereof; hydrazoline compounds; triphenyl amines; triphenylmethanes; butadienes; stilbenes; quinone compounds such as anthraquinon diphenoquinons or derivatives thereof; fullerenes such as $C_{60}$ and $C_{70}$ and derivatives thereof; $\pi$ conjugate high polymers or oligomers such as polyacetylenes, polypyrroles, polythiophenes and polyanilines; $\sigma$ conjugate high polymers or oligomers such as polysilanes and polygermanes; and polycyclic aromatic compounds such as anthracenes, pyrenes, phenanthrenes, and coronenes. These charge transporting materials may be used singly or in combination.

The photochromic materials (3) are not particularly limited as long as they can induce a photochromic reaction, and can be appropriately selected depending on the intended use; examples thereof include azobenzene compounds, stilbene compounds, indigo compounds, thioindigo compounds, spiropyran compounds, spirooxazine compounds, fulgide compounds, anthracenes compounds, hydrazone compounds and cinnamic acid compounds. Of these compounds, azobenzene compounds and stilbene compounds, which undergo structural changes as a result of cis-trans isomerism upon irradiation with light; and spiropyran compounds and spirooxazine compounds, which undergo structural changes (ring-opening and ring-closure) upon irradiation with light, are most preferable.

Examples of the chalcogen materials (5) include materials containing chalcogen element-containing chalcogenide glass plus metallic particles which are dispersed in the chalcogenide glass and which can upon irradiation with light diffuse in the chalcogenide glass.

The chalcogenide glass is not particularly limited as long as it is composed of a nonoxide amorphous material containing a chalcogen element such as S, Te, or Se and metallic particles can be photo-doped therein.

Preferred examples of amorphous materials containing chalcogen elements include Ge-S glasses, As-S glasses, As-Se glasses and As-Se-Ce glasses. Of these glasses, Ge-S glasses are preferably used. When Ge-S glass is used for the chalcogenide glass, the atomic ratio between Ge and S in the Ge-S glass can be suitably changed depending on the wavelength of light to be applied. However, chalcogenide glasses composed primarily of a composition represented by $GeS_2$ are preferably used.

The metallic particles are not particularly limited as long as they can be doped in the chalcogenide glass upon irradiation with light, and can be appropriately selected depending on the intended use; examples thereof include Al, Au, Cu, Cr, Ni, Pt, Sn, In, Pd, Ti, Fe, Ta, W, Zn and Ag. Among these, Ag, Au, and Cu are more likely to be photo-doped in chalogenide glass, and Ag is most preferable because it has excellent photodoping performance.

The content of the metallic particles dispersed in the chalcogenide glass is preferably 0.1% by volume to 2.0% by volume, more preferably 0.1% by volume to 1.0% by volume of the total volume of the recording layer. If the content of the metallic particles is less than 0.1% by volume, the change in transmittance as a result of photodoping is insufficient, which may result in the reduction in the recording accuracy. Whereas if the content of the metallic particles is more than 2.0% by volume, the light transmittance of the recording material decreases, leading to unsatisfactory photodoping in some cases.

-Thickness of recording layer-

The thickness of the recording layer is not particularly limited and can be appropriately set depending on the intended purpose; the thickness of the recording layer is preferably 1 $\mu$m to 1,000 $\mu$m, more preferably 100 $\mu$m to 700 $\mu$m.

If the thickness of the recording layer is within a preferable range, it will result in excellent S/N ratios even when 10- to 300-fold shift-multiplexing recording operation is performed; more excellent S/N ratios can be obtained in a more

preferable thickness range.

<First filter layer and second filter layer>

The first filter layer and second filter layer (hereinafter, may be simply referred to as "filter layer") serve to eliminate the occurrence fluctuations in the wavelengths selected to be reflected in a case where the incident angle is changed, and has a function to prevent irregular reflection of the information light and reference light at the reflective film of an optical recording medium to thereby prevent the occurrence of noise. Providing such a filter layer on the optical recording medium will lead to high definition and excellent diffraction efficiency.

The filter layer preferably has a function to admit light of first wavelength and reflect light of second wavelength which is different from the first wavelength, wherein first wavelength is preferably 350 nm to 600 nm, and the second wavelength is preferably 600 nm to 900 nm. To achieve this, an optical recording medium in which a recording layer, filter layer and servo pit pattern are laminated in this order from the optical system is preferable.

The filter layer preferably has an optical transmittance of 50% or more, more preferably 80% or more for light of wavelength 655 nm, and preferably has a reflectivity of 30% or more, more preferably 40% or more for light of wavelength 532 nm, both incident at an angle of within $\pm$40°.

The filter layer is not particularly limited and can be appropriately selected depending on the intended purpose. For example, the filter layer is a laminate of a dielectric material-deposited layer, a single-layered or multilayered cholesteric liquid crystal layer, and additional layers provided on an as-needed basis. In addition, the filter layer may comprise a colored material-containing layer, and the cholesteric liquid crystal layer may be disposed thereon or the dielectric material-deposited layer may be disposed thereon.

The filter layer may be directly applied and deposited onto the support together with the recording layer. Alternatively, the filter layer may be previously deposited on a base material such as a film to prepare a filter for optical recording media, and the filter may be deposited on the support.

-Dielectric material-deposited layer-

The dielectric material-deposited layer is a laminate of multiple dielectric thin films with different refraction indices. For the dielectric material-deposited layer to serve as a reflective film through which light of desired wavelength passes, it is preferably a laminate of alternating dielectric thin films with high and low indices of refraction; however, three or more different dielectric thin films may be laminated. When the colored material-containing layer is provided, it is formed under the dielectric material-deposited layer.

The number of the dielectric thin films to be laminated is preferably 2 to 20, more preferably 2 to 12, still further preferably 4 to 10, most preferably 6 to 8. If the number of the dielectric thin films to be laminated is greater than 20, it results in the reduction in productivity because of multilayer vapor deposition. The object and effect of the invention cannot be achieved in some cases.

The order in which the dielectric thin films are laminated is not particularly limited, and can be appropriately determined depending on the intended purpose. A dielectric thin film with low refractive index is first deposited in a case where an adjacent dielectric thin film has high refractive index. On the other hand, a dielectric thin film with high refractive index is first deposited in a case where an adjacent dielectric thin film has low refractive index. The criteria of refractive index for determining whether a dielectric thin film has high or low refractive index is preferably set to 1.8; note, however, that this determination is made on an arbitrary basis. That is, dielectric thin films with different refractive indices equal to or greater than 1.8 (i.e., there are dielectric thin films with high and low refractive indices) may be used to form such a laminate.

The material for the dielectric thin film with high refractive index is not particularly limited and can be appropriately selected depending on the intended purpose; examples thereof include $Sb_2O_3$, $Sb_2S_3$, $Bi_2O_3$, $CeO_2$, $CeF_3$, $HfO_2$, $La_2O_3$, $Nd_2O3$, $Pr_6O_{11}$, $Sc_2O_3$, SiO, $Ta_2O_5$, $TiO_2$, TICI, $Y_2O_3$, ZnSe, ZnS and $ZrO_2$. Among these, $Bi_2O_3$, $CeO_2$, $CeF_3$, $HfO_2$, SiO, $Ta_2O_5$, $TiO_2$, $Y_2O_3$, ZnSe, ZnS and $ZrO_2$ are preferable, and SiO, $Ta_2O_5$, $TiO_2$ $Y_2O_3$, ZnSe, ZnS and $ZrO_2$ are more preferable.

The material for the dielectric thin film with low refractive index is not particularly limited and can be appropriately selected depending on the intended purpose; examples thereof include $Al_2O_3$, $BiF_3$, $CaF_2$, $LaF_3$, $PbCl_2$, $PbF_2$, LiF, $MgF_2$, MgO, $NdF_3$, $SiO_2$, $Si_2O_3$, NaF, $ThO_2$ and $ThF_4$. Among these, $Al_2O_3$, $BiF_3$, $CaF_2$, $MgF_2$, MgO, $SiO_2$ and $Si_2O_3$ are preferable, and $Al_2O_3$, $CaF_2$, $MgF_2$, MgO, $SiO_2$ and $Si_2O_3$ are more preferable.

Note that the atomic ratio in the material for the dielectric thin film is not particularly limited and can be appropriately set depending on the intended purpose. The atomic ratio can be adjusted by changing the concentration of atmosphere's gas upon deposition of dielectric thin films.

The method for depositing the dielectric thin film is not particularly limited and can be appropriately selected depending on the intended purpose. For example, a vacuum vapor deposition process such as ion plating and ion beam,

a physical vapor deposition (PVD) such as sputtering, and a chemical vapor deposition (CVD) can be used. Among these methods, a vacuum vapor deposition and sputtering are preferable, and sputtering is most preferable.

For the sputtering, DC sputtering is preferable because it offers high deposition rate. Note that highly conductive material is preferably used when DC sputtering is employed.

Examples of the method for depositing multiple dielectric thin films by sputtering include: (1) a single-chamber method, where multiple dielectric thin films are alternately or sequentially deposited using a single chamber; and (2) a multi-chamber method, where multiple dielectric thin films are sequentially deposited using multiple chambers. In view of the productivity and to prevent contamination among materials, the multi-chamber method is most preferable.

The thickness of the dielectric thin film is preferably $\lambda/16$ to $\lambda$, more preferably $\lambda/8$ to $3\lambda/4$, most preferably $\lambda/6$ to $3\lambda/8$ in terms of optical wavelength.

-Colored material-containing layer-

The colored material-containing layer comprises at least one colored material of a pigment and dye, and comprises a binder resin, and additional components on an as-needed basis.

The colored material is not particularly limited and can be appropriately selected depending on the intended purpose, however, a red pigment is preferable. Preferably, the red pigment has an optical transmittance of 33% or less for light of wavelength 532 nm and 66% or more for light of wavelength 655 nm.

Suitable examples of the binder resin include polyvinylalcohol resins.

It is preferable that the surface of the colored material-containing layer has been subjected to a rubbing treatment.

-Cholesteric liquid crystal layer-

The cholesteric liquid crystal layer contains at least a cholesterol derivative, or a nematic liquid crystal compound and a chiral compound, and further contains additional components such as a polymerizable mononer on an as-needed basis.

The cholesteric liquid crystal layer may be either a single-layered cholesteric liquid crystal layer or a multilayered cholesteric liquid crystal layer.

In the optical recording medium in which two or more cholesteric liquid crystal layers are laminated, fluctuations in the wavelengths selected to be reflected do not occur in a case where the incident angle is changed, and the information light and reference light used when recording or reproducing, further reproduction light do not reach the reflective film. Thus, generation of diffusion light due to diffuse reflection on a reflective surface can be prevented. Therefore, a CMOS sensor or CCD does not detect noises to be caused by the diffusion light and to be superimposed on reconstructed images, allowing the detection of reconstructed images to such a degree that at least error can be corrected. Noise components caused by the diffusion light becomes a big problem with the increase of multiplicity. Namely, the larger the multiplicity becomes, for example, if the multiplicity becomes 10 or more, the result will be extremely low diffraction efficiency from one hologram, making it difficult to detect reconstructed images in the presence of diffusion noises. This configuration can remove such difficulty and can achieve higher density image recording than ever before.

The cholesteric liquid crystal layer preferably has a circularly polarizing function. The cholesteric liquid crystal layer selectively reflects light components which have been circularly polarized in the direction in which the liquid crystal helix rotates (i.e., to the right or left) and which have a wavelength that equals to the pitch of the liquid crystal helix. The cholesteric liquid crystal layer utilizes the selective reflection characteristics to separate a particular circularly polarized component of a particular wavelength from natural light of different wavelengths, and reflects the other light components.

The filter for optical recording media preferably has a reflectivity of 40% or more for light of a wavelength range of $\lambda_0$ to $\lambda_0/\cos20°$ (where $\lambda_0$ represents the wavelength of irradiation light) incident at an angle of $\pm20°$ (measured from the normal of the surface of the recording layer). Most preferably, the filter for optical recording media has a reflectivity of 40% or more for light of a wavelength range of $\lambda_0$ to $\lambda_0/\cos40°$ (where $\lambda_0$ represents the wavelength of irradiation light) incident at an angle of $\pm40°$ (measured from the normal of the surface of the recording layer). If the optical reflectivity is 40% or more for light of a wavelength range of $\lambda_0$ to $\lambda_0/\cos20°$, especially $\lambda_0$ to $\lambda_0/\cos40°$ (where $\lambda_0$ represents the wavelength of irradiation light), it is made possible to eliminate the dependency of reflectivity on incident angle and to adopt optical lens system that is used for general optical recording media. For this purpose, the cholesteric liquid crystal layer preferably has a large selectively-reflecting wavelength range.

More specifically, when a single-layer cholesteric liquid crystal layer is used, the selectively-reflecting wavelength range $\Delta\lambda$ is expressed by the following Equation (1) and thus it is preferable to use liquid crystal with large (ne - no):

$$\Delta\lambda = 2\lambda(ne - no) / (ne + no) \ldots \text{Equation (1)}$$

where "no" represents the refractive index of the nematic liquid crystal molecules for normal light, contained in the cholesteric liquid crystal layer, "ne" represents the refractive index of the nematic liquid crystal molecules for abnormal light, and λ represents the central wavelength of light selectively reflected.

As described in Japanese Patent Application No. 2004-352081, it is preferable to use photoreactive chiral compounds whose helical pitch can be largely altered by irradiation with light and to use a filter for optical recording medium in which helical pitch is continuously changed in the thickness direction of the liquid crystal layer by adjusting the content of the photoreactive chiral compound and UV irradiation time.

In the case of a multilayered cholesteric liquid crystal layer, cholesteric liquid crystal layers with different λ values, where the helices rotate to the same direction, are preferably laminated.

The ranges of λ in the cholesteric liquid crystal layers may be continuous with each other. The selectively-reflecting wavelength range of the cholesteric liquid crystal layer is preferably 100 nm or more.

The cholesteric liquid crystal layer is not particularly limited as long as it has the foregoing characteristics, and can be appropriately selected depending on the intended purpose. As described above, the cholesteric liquid crystal layer contains a nematic liquid crystal compound and a chiral compound, and further contains polymerizable mononers, and additional components on as-needed basis.

-Nematic liquid crystal compounds-

The nematic liquid crystal compounds features that their liquid crystal phase solidifies under the liquid crystal transition temperature, and can be appropriately selected from liquid crystal compounds, high-molecular liquid crystal compounds and polymerizable liquid crystal compounds, all of which have refractive index anisotropy Δn of 0.10 to 0.40. For example, such nematic liquid crystal compound molecules that are in the liquid crystal state by treatment with heat can be aligned by use of a surface-rubbed alignment substrate, followed by a cooling treatment or the like to allow them to be immobilized to the substrate to serve as a solid phase.

The nematic liquid crystal compound is not particularly limited and can be appropriately selected depending on the intended purpose. Nematic liquid crystal compounds that have polymerizable groups in their molecule are preferable for the purpose of ensuring sufficient curing capability, and ultraviolet (UV) polymerizable liquid crystal compounds are suitably used. Examples of such ultraviolet (UV) polymerizable liquid crystal compounds include the following commercially available products: PALIOCOLOR LC242 (bland name, produced by BASF Corp.); E7 (bland name, produced by Merck Ltd.); LC-Silicon-CC3767 (bland name, produced by Wacker-Chem); and L35, L42, L55, L59, L63, L79 and L83 (bland name, produced by Takasago International Corp.).

The content of the nematic liquid crystal compound is preferably 30% by mass to 99% by mass, more preferably 50% by mass to 99% by mass of the total solid components in each of the cholesteric liquid crystal layer. If the content of the nematic liquid crystal compound is less than 30% by mass, it may result in poor alignment of nematic liquid crystal molecules.

-Chiral compounds-

In the case of a multilayered cholesteric liquid crystal layer, the chiral compound is not particularly limited and can be appropriately selected from those known in the art depending on the intended purpose; in view of the hues of the liquid crystal compounds and for enhanced color purity, for example, isomannide compounds, catechine compounds, isosorbide compounds, fenchone compounds and carvone compounds can be used. These chiral compounds may be used singly or in combination.

In addition, commercially available chiral compounds can also be used; examples thereof include S101, R811 and CB15 (bland name, produced by Merck Ltd.); and PALIOCOLOR LC756 (bland name, produced by BASF Corp.).

The chiral compound may include a photoreactive chiral compound, and the photoreactive chiral compound has a chiral site and a photoreactive group, wherein the chiral site is preferably at least one species selected from isosorbide compounds, isomannide compounds and binaphthol compounds. In addition, the photoreactive group is preferably a group that undergoes trans-cis isomerization about a carbon-carbon double bond upon irradiation with light.

The content of the chiral compound in each liquid crystal layer of the multilayered cholesteric liquid crystal layer is preferably 30% by mass or less, more preferably 20% by mass or less of the total solid components in each liquid crystal layer. If the content of the chiral compound is greater than 30% by mass, it may result in poor alignment of cholesteric liquid crystal molecules.

-Polymerizable monomers-

It is also possible to add polymerizable monomers to the cholesteric liquid crystal layer in order to, for example, increase the degree of cure in the layer (e.g., layer strength). Combined use of polymerizable monomers can increase

the strength of the cholesteric liquid crystal layer, where different twisting degrees have been set for liquid crystals through which light propagates (e.g., the distribution of wavelengths of light to be reflected has been created) and where the helical structure (i.e., selective reflection capability) has been fixed. Note, however, that such polymerizable monomers need not necessarily be added if the liquid crystal compound bears polymerizable groups in a molecule.

The polymerizable monomers are not particularly limited and can be appropriately selected from those known in the art; examples thereof include monomers bearing ethylenically unsaturated bonds, and specific examples of such monomers include multifunctional monomers such as pentaerythritoltetraacrylate and dipentaerythritolhexaacrylate. These monomers can be used singly or in combination.

The content of the polymerizable monomers is preferably 50% by mass or less, more preferably 1% by mass to 20% by mass of the total solid components in the cholesteric liquid crystal layer. If the content of the polymerizable monomers is greater than 50% by mass, it may inhibit the alignment of cholesteric liquid crystal molecules.

-Additional components-

The additional components are not particularly limited and can be appropriately selected depending on the intended purpose; examples thereof include photoinitiators, sensitizers, binder resins, polymerization inhibitors, solvents, surfactants, thickeners, dyes, pigments, ultraviolet absorbers and gelling agents.

The photoinitiators are not particularly limited and can be appropriately selected from those known in the art; examples thereof include p-methoxyphenyl-2,4-bis(trichloromethyl)-s-triazine, 2-(p-buthoxystyryl)-5-trichloromethyl-1,3,4-oxadiazole, 9-phenylacridine, 9,10-dimethylbenzphenazine, benzophenone/Michler's ketone, hexaarylbiimidazole/mercaptobenzoimidazole, benzyldimethylketal, acylphosphine derivatives, and thioxanthone/amine. These photoinitiators may be used singly or in combination.

In addition, commercially available photoinitiators can also be used; examples thereof include IRGA CURE 907, IRGA CURE 369, IRGA CURE 784 and IRGA CURE 814 (bland name, produced by Ciba Specialty Chemicals); and Lucirin TPO (bland name, produced by BASF Corp.).

The content of the photoinitiator is preferably 0.1% by mass to 20% by mass, more preferably 0.5% by mass to 5% by mass of the total solid components in the cholesteric liquid crystal layer. If the content of the photoinitiator is less than 0.1% by mass, it may take long time for the polymerization because of reduced curing efficiency upon irradiation with light. If the content of the photoinitiator is greater than 20% by mass, it may result in poor optical transmittance over the spectrum from ultraviolet to visible light.

The sensitizer can be added on an as-needed basis in order to increase the degree of cure in the cholesteric liquid crystal layer.

The sensitizer is not particularly limited and can be appropriately selected from those known in the art; examples thereof include diethylthioxanthone and isopropylthioxanthone.

The content of the sensitizer is preferably 0.001% by mass to 1.0% by mass of the total solid components in the cholesteric liquid crystal layer.

The binder resin is not particularly limited and can be appropriately selected from those known in the art; examples thereof include polyvinyl alcohols; polystyrene compounds such as polystyrene and poly-$\alpha$-methylstyrene; cellulose resins such as methylcellulose, ethylcellulose and acetylcellulose; acid cellulose derivatives bearing carboxylic groups on their side chains; acetal resins such as polyvinyl formal and polyvinyl butyral; methacrylic acid copolymers; acrylic acid copolymers; itaconic acid copolymers; crotonic acid copolymers; malleic acid copolymers; partially-esterified malleic acid copolymers; homopolymers of acrylic acid alkylesters or homopolymers of methacrylic acid alkyl esters; and polymers with additional hydroxyl groups. These binder resins may be used singly or in combination.

Examples of alkyl groups in the homopolymers of acrylic acid alkylesters or homopolymers of methacrylic acid alkyl esters include methyl group, ethyl group, n-propyl group, n-butyl group, iso-butyl group, n-hexyl group, cyclohexyl group and 2-ethylhexyl group.

Examples of the polymers with additional hydroxyl groups include benzyl(meth)acrylate/(homopolymers of methacrylic acid) acrylic acid copolymers, and multicomponent copolymers of benzyl(meth)acrylate/(meth)acrylic acid/other monomers.

The content of the binder resin is preferably 80% by mass or less, more preferably 50% by mass or less of the total solid components in the cholesteric liquid crystal layer. If the content of the binder resin is greater than 80% by mass, it may result in poor alignment of cholesteric liquid crystal molecules.

The polymerization inhibitor is not particularly limited and can be appropriately selected depending on the intended purpose; examples thereof include hydroquinones, hydroquinone monomethylethers, phenothiazines, benzoquinones and derivatives thereof.

The content of the polymerization inhibitor is preferably 10% by mass or less, more preferably 0.01% by mass to 1% by mass of the total solid components in the polymerizable monomers.

The solvent is not particularly limited and can be appropriately selected from those known in the art; examples

thereof include alkoxypropionic acid esters such as 3-methoxypropionic acid methylester, 3-methoxypropionic acid ethylester, 3-methoxypropionic acid propylester, 3-ethoxypropionic acid methylester, 3-ethoxypropionic acid ethylester and 3-ethoxypropionic acid propylester; alkoxy alcohol esters such as 2-methoxypropylacetate, 2-ethoxypropylacetate and 3-methoxybutylacetate; lactic acid esters such as methyl lactate and ethyl lactate; ketones such as methyl ethyl ketone, cyclohexanone and methylcyclohexanone; γ-butyrolactone; N-methylpyrrolidone; dimethylsulfoxide; chloroform; and tetrahydrofuran. These solvents may be used singly or in combination.

The cholesteric liquid crystal layer can be formed in the following procedure: For example, a coating solution for cholesteric liquid crystal layer prepared by use of the solvent is applied on the base material (note that this coating solution is prepared for each liquid crystal layer in the case of a multilayered cholesteric liquid crystal layer). Thereafter, the coating solution is dried, and cured by irradiating it with ultraviolet light.

For mass production, the cholesteric liquid crystal layer can be formed in the following procedure: The base material is previously wound in a roll shape, and the coating solution is then applied on the base material using a long, continuous coater such as a bar coater, die coater, blade coater, or curtain coater.

Examples of the coating method include a spin coating method, casting method, roll coating method, flow coating method, printing method, dip coating method, casting deposition method, bar coating method and gravure printing method.

The UV irradiation condition is not particularly limited and can be appropriately determined depending on the intended purpose; the wavelength of UV light to be applied is preferably 160 nm to 380 nm, more preferably 250 nm to 380 nm; irradiation time is preferably 0.1 second to 600 seconds, more preferably 0.3 second to 300 seconds. By adjusting the UV irradiation condition, it is possible to change the helical pitch in the cholesteric liquid crystal layer, in which the photoreactive chiral compound is used, continuously in the thickness direction of the liquid crystal layer.

It is also possible to add an ultraviolet absorber to the cholesteric liquid crystal layer in order to adjust the UV irradiation condition. The ultraviolet absorber is not particularly limited and can be appropriately selected depending on the intended purpose; suitable examples thereof include benzophenone ultraviolet absorbers, benzotriazole ultraviolet absorbers, salicylic acid ultraviolet absorbers, cyanoacrylate ultraviolet absorbers and oxalic acid anilide ultraviolet absorbers. Specific examples of these ultraviolet absorbers are disclosed in JP-A Nos. 47-10537, 58-111942, 58-212844, 59-19945, 59-46646, 59-109055 and 63-53544; JP-B Nos. 36-10466, 42-26187, 48-30492, 48-31255, 48-41572, 48-54965, and 50-10726; and U.S. Patent Nos. 2,719,086, 3,707,375, 3,754,919 and 4,220,711.

In the case of a multilayered colesteric liquid crystal layer, the thickness of each cholesteric liquid crystal layer is preferably 1 μm to 10 μm, more preferably 2 μm to 7 μm. If the thickness of the cholesteric liquid crystal layer is less than 1 μm, it results in poor selective reflectivity. If the thickness of the cholesteric liquid crystal layer is greater than 10 μm, uniformly aligned liquid crystal molecules in the cholesteric liquid crystal layer may orient in random directions.

The total thickness of the cholesteric liquid crystal layer in a multilayered cholesteric liquid crystal layer (or the thickness of a single-layered liquid crystal layer) is preferably 1 μm to 30 μm, more preferably 3 μm to 10 μm.

<The production process for a filter for optical recording medium which has a colesteric liquid crystal layer>

The process for producing the filter is not particularly limited and can be appropriately selected depending on the intended purpose.

The filter for optical recording media is not particularly limited and can be appropriately selected depending on the intended purpose. The filter is preferably processed into a disc-shape together with a base material through, for example, a stamping process, and is preferably disposed on the servo substrate of an optical recording medium. Alternatively, the filter can be directly disposed on the servo substrate without interposing a base material between them in a case where the filter is intended to be used for the filter layer of the optical recording medium.

<Base material>

The base material is not particularly limited and can be appropriately selected depending on the intended purpose. For example, materials used for the top substrate may be used.

The base material may be either a freshly prepared one or a commercially available one.

The thickness of the base material is not particularly limited and can be appropriately set depending on the intended purpose; the thickness is preferably 10 μm to 500 μm, more preferably 50 μm to 300 μm. If the thickness of the base material is less than 10 μm, the substrate bends and thus its adhesion properties with other components are reduced. If the thickness of the base material is greater than 500 μm, the focus of information light needs to be shifted by a large amount from the focus of reference light, leading to the necessity of preparing a big optical system. For bonding a film through which light of desired wavelength passes, known adhesives can be used in any combination.

The adhesive is not particularly limited and can be appropriately selected depending on the intended purpose; examples thereof include UV curable adhesives, emulsion adhesives, one-component curable adhesives and two-component curable adhesives. These known adhesives can be used in any combination.

The agglutinant is not particularly limited and can be appropriately selected depending on the intended purpose; examples thereof include rubber agglutinants, acrylic agglutinants, silicone agglutinants, urethane agglutinants, vinylalkyl ether agglutinants, polyvinylalcohol agglutinants, polyvinylpyrrolidone agglutinants, polyacrylamide agglutinants and cellulose agglutinants.

The thickness of the adhesive or agglutinant applied is not particularly limited and can be appropriately set depending on the intended purpose. In the case of adhesive, the thickness is preferably 0.1 μm to 10 μm, more preferably 0.1 μm to 5 μm in light of the optical characteristics and slimness. In the case of agglutinant, the thickness is preferably 1 μm to 50 μm, more preferably 2 μm to 30 μm.

Note, however, that it is possible to directly form the filter layer on the substrate depending on the circumstances.

<First gap layer $G_1$ and second gap layer $G_1$>

The first gap layer $G_1$ and second gap layer $G_1$ (hereinafter, may be simply referred to as "gap layer $G_1$") are formed to smooth the surface of the servo substrate and is effective for adjusting the size of holograms formed in the recording layer based on the mechanism that the focus of servo signal light is shifted from the focus of holographic signal light, thereby increasing the S/N ratio of the holographic signal light.

The material for the gap layer $G_1$ is preferably a stable material in respect of heat resistance such that even if a filter layer or the like is laminated on the gap layer $G_1$, the gap layer $G_1$ is not softened due to the heat during lamination and wrinkles and/or cracks are not caused in the filter layer. Preferably, the material for the gap layer $G_1$ is a non-thermosoftening material.

-Non-thermosoftening material-

The non-thermosoftening material is not particularly limited and can be appropriately selected depending on the intended purpose as long as the deflection temperature under load in accordance with JIS K7207 is 70°C or more under the condition of 4.6 kgf/cm$^2$. For example, the non-thermosoftening material may be inorganic material or may be organic material.

When the non-thermosoftening material is inorganic material, softening due to the heat during lamination is hard to occur, but the non-thermosoftening material has at least a heat resistance of 70°C or more as measured under the condition of 4.6 kgf/cm$^2$ according to JIS K7207.

The deflection temperature under load can be measured under the condition according to JIS K7207, for example, as follows. Specifically, a test piece is prepared by using a film material with a size of 127 mm×12.7 mm, thickness of 0:1 mm having a sufficiently low deflection temperature under load and forming a film made of inorganic material thereon by e.g. vapor deposition. Then, measurement is carried out under the condition of 4.6 kgf/cm$^2$ at a rate of temperature rise of 2°C/min.

The organic material can be appropriately selected depending on the intended purpose; examples thereof include acetate resins such as triacetylcellulose, polyester resins, polyethersulfone resins, polysulfone resins, polycarbonate resins, polyamide resins, polyimide resins, polyolefin resins, acrylic resins, polynorbornene resins, cellulose resins, polyarylate resins, polystyrene resins, polyvinylalcohol resins, polyvinyl chloride resins, polyvinylidene chloride resins, and polyacrylic resins. Among these, polycarbonate resins and acrylic resins are preferable. These may be used singly or in combination.

The inorganic material can be appropriately selected depending on the intended purpose; examples thereof include $SiO_2$ $TiO_2$, $Al_2O_3$, NiO, SiO, TiO, ZnO, ZnS, $MgF_2$, $Ti_2O_5$, $Nb_2O_5$, and $BaTiO_3$. Among these, $SiO_2$, $TiO_2$ and $Al_2O_3$ are preferable in terms of refractive index, transparency, and versatility. These may be used singly or in combination.

-Method for forming gap layer Gi-

The method for forming the gap layer $G_1$ is not particularly limited and can be appropriately selected depending on the intended purpose. The gap layer $G_1$ can be formed on a servo substrate by, for example, a spin coating method, method for bonding a sheet member made of e.g. resin by use of a non-thermosoftening adhesive, vapor deposition, sputtering, bar coater, slit coater, and plasma CVD. Among these, the spin coating method, method for bonding a sheet member, vapor deposition and sputtering are preferable in that the gap layer $G_1$ can be formed uniformly and film thickness can be controlled easily.

--Spin coating--

The spin coating is a method in which a coating solution containing materials dissolved into a solvent is dropped

on the substrate rotating at high speed, the coating solution is applied uniformly on the surface of the substrate utilizing centrifugal force due to the rotation, and then heat treated, removing the solvent through volatilization and causing raw materials to undergo a chemical reaction to thereby form a layer.

The coater for use in the spin coating is not particularly limited and can be appropriately selected depending on the intended purpose; examples thereof include spin coaters, slit coaters, and bar coaters.

Among organic materials of the non-thermosoftening material, preferred materials are resins such as triacetylcellulose (TAC), polycarbonate (PC), polyethylene terephthalate (PET), polystyrene (PS), polysulfone (PSF), polyvinylalcohol (PVA) and methyl polymethacrylate (PMMA) in terms of transparency.

Examples of the coating solution for the spin coating include those in which a UV-curable material is added to the polycarbonate (PC) or methyl polymethacrylate (PMMA).

In the case of polycarbonate (PC), those prepared by dissolving and dispersing with use of methyl ethyl ketone as a solvent can be used.

Prepared coating solutions containing a monomer, oligomer, photoinitiator and other additives can be used as the coating solution in which a UV-curable material is added to the polycarbonate (PC).

Examples of the monomer include Aronix M-309, M-310, produced by Toagosei Co. Ltd.

Examples of the oligomer include urethane acrylate and polyester acrylate.

Examples of the photoinitiator include IRGACURE series, produced by Ciba Specialty Chemicals.

The region on which the coating solution is applied is the entire surface of the servo substrate on the side where a servo pit pattern, etc. is formed. When a reflective film or the like is formed on the surface, the coating solution is applied on the entire surface of the reflective film.

After the application, the applied coating solution may be cured by drying at 60°C to 100°C for 10 minutes to 60 minutes or may be cured by the exposure to UV radiation having a wavelength 100 nm to 400 nm to allow a chemical reaction using the UV energy.

--Bonding of sheet member--

The sheet member is a film sheet and is bonded to the surface of the servo substrate on the side where a servo pit pattern, etc. is formed using a non-thermosoftening adhesive or the like. As a result, the gap layer $G_1$ can be formed. When a reflective film or the like is formed on the surface, the sheet member is bonded to the surface of the reflective film.

The material for the sheet member can be appropriately selected depending on the intended purpose; examples thereof include transparent resin films such as triacetylcellulose (TAC), polycarbonate (PC), polyethylene terephthalate (PET), polystyrene (PS), polysulfone (PSF), polyvinylalcohol (PVA) and methyl polymethacrylate (PMMA); norbornene resin films such as ARTON (bland name, produced by JSR Corp.), ZEONOA (bland name, produced by Nippon Zeon).

Among these, those with high isotropy are preferable, and TAC, PC, ARTON and ZEONOA are most preferable.

The thickness of the sheet member is not particularly limited and can be appropriately set depending on the intended purpose; the thickness is preferably 5 $\mu$m to 200 $\mu$m, more preferably 10 $\mu$m to 100 $\mu$m.

The non-thermosoftening adhesive is not particularly limited and can be appropriately selected depending on the intended purpose; examples thereof include UV adhesives, acryl adhesives, epoxy adhesives, and rubber adhesives. Among these, UV adhesives are preferable in terms of transparency and in that curing is performed conveniently.

The adhesive condition is preferably at a temperature of 20°C to 30°C and a humidity of 20 % to 80%.

The sheet member can be bonded by washing the surface of the servo substrate, drying, and pressure bonding the sheet member using the non-thermosoftening adhesive by means of e.g. a laminator (model name: HAL 110aa, produced by Sankyo Co., Ltd.) or vacuum bonding equipment (produced by Shibaura Mechatronics Corporation). The conditions of pressure bonding with a laminator are preferably a pressure-roller temperature of 20°C to 30°C, pressure-roller pressure of 0.1 MPa to 1.0 MPa and bonding speed of 0.1 m/min to 5.0 m/ min.

-Vapor deposition--

The vapor deposition can be performed by any method without limitation and the method can be appropriately selected depending on the intended purpose; examples thereof include vacuum vapor deposition, molecular-beam deposition (MEB), ion plating, ion beam deposition, and electron beam vapor deposition. In the vacuum vapor deposition, an evaporation source and a substrate receiving deposition are placed in a vacuum vessel and a film is formed generally under the pressure of about $10^{-2}$ Pa to $10^{-4}$ Pa.

In the molecular-beam deposition (MEB), almost collimated molecular-beam is used, and Knudsen cell (K cell) with an orifice at an exhaust nozzle of resistively heated crucible is used as an evaporation source. Typically, a film is formed atom-by-atom under very high vacuum conditions of $10^{-7}$ Pa to $10^{-9}$ Pa. The ion plating includes a variety of methods. For example, in a matrix method, a negative voltage of several kV is applied to a substrate receiving deposition and a film is formed under a pressure of several Pa. Introduced ions collide with the substrate receiving deposition at

high speed and are attached with the energy. Thus, a film with strong adherence can be obtained. The ion beam deposition is a method in which an ion beam of a substance for thin film is made in an ion source, and the ion beam is accelerated to form a thin film. The ion beam deposition is one type of the ion plating. Cluster ion beam deposition is a typical method, by which a film with a satisfactory crystalline quality can be obtained.

The evaporation source is not particularly limited and can be appropriately selected depending on the intended purpose. For example, among the inorganic materials, $SiO_2$, $TiO_2$ and $Al_2O_3$ are preferable in terms of refractive index, transparency, and versatility. These may be used singly or in combination.

The deposition region is the entire surface of the servo substrate on the side where a servo pit pattern, etc. is formed. When a reflective film or the like is formed on the surface, the deposition region is the entire surface of the reflective film.

--Sputtering--

The sputtering is a method in which a direct current high voltage is applied between a substrate receiving deposition and a target (substance to be deposited) while introducing an inert gas such as an Ar gas in a vacuum of $1.3\times10^{-2}$ Pa to 1.3 Pa, Ar or the like ionized by glow discharge is allowed to collide with the target as a cathode, and sputtered target substance is deposited on the substrate receiving deposition as an anode to form a film. In addition, reactive sputtering (e.g. ITO, TiN) can be performed by introducing a trace amount of reactive gas such as $O_2$ and $N_2$ gas together with the above-mentioned Ar gas.

The target is not particularly limited and can be appropriately selected depending on the intended purpose. For example, among the inorganic materials, $SiO_2$, $TiO_2$, and $Al_2O_3$ are preferable in terms of refractive index, transparency, and versatility. These may be used singly or in combination.

It is preferable that the sputtering region is the entire surface of the servo substrate on the side where a servo pit pattern, etc. is formed, and when a reflective film or the like is formed on the surface, the sputtering region is the entire surface of the reflective film.

--Thickness of gap layer Gi--

The thickness of the gap layer $G_1$ after each operation of the spin coating, drying, the bonding of sheet member, the vapor deposition, and the sputtering is preferably 5 $\mu$m to 200 $\mu$m, more preferably 10 $\mu$m to 100 $\mu$m. If the thickness is less than 5 $\mu$m, the servo signal light and holographic signal light are mixed and the S/N ratio of holographic signal light is reduced, resulting in the increase of error rate in some cases. If the thickness is more than 200 $\mu$m, it may take longer time to form a gap layer $G_1$ during production or the weight of the disc may become too large due to the increase of the total thickness of disc.

<First gap layer $G_2$ and second gap layer $G_2$>

The first gap layer $G_2$ and second gap layer $G_2$ (hereinafter, may be simply referred to as "gap layer $G_2$") are formed between the recording layer and the filter layer.

The gap layer $G_2$ has a function to prevent the deterioration of multiplexing recording capability of optical recording medium. Specifically, there is a point in the recording layer at which both information light and reproduction light focus; if this focusing area is embedded in photopolymers, excessive exposure takes places and thus an excess amount of monomers are consumed, leading to poor multiplexing recording performance. To avoid this, a transparent, inert gap layer $G_2$ is provided, by which an inert region is formed, making it possible to constrain the excessive consumption and to maintain high multiplexing recording performance.

The material for the gap layer $G_2$ is not particularly limited and can be appropriately selected depending on the intended purpose; examples thereof include transparent resin films such as triacetylcellulose (TAC), polycarbonate (PC), polyethylene terephthalate (PET), polystyrene (PS), polysulfone (PSF), polyvinylalcohol (PVA) and methyl polymethacrylate (PMMA); norbornene resin films such as ARTON (bland name, produced by JSR Corp.), ZEONOA (bland name, produced by Nippon Zeon).

Among these, those with high isotropy are preferable, and TAC, PC, ARTON and ZEONOA are most preferable.

The thickness of the gap layer $G_2$ is not particularly limited and can be appropriately set depending on the intended purpose. Preferably, the thickness of the gap layer $G_2$ is 1 $\mu$m to 200 $\mu$m, more preferably, 30 $\mu$m to 100 $\mu$m.

The gap layer $G_2$ with a thickness of less than 1 $\mu$m may invite reduced sensitivity or reduced multiplicity because too much amount of monomers in the holographic recording layer are consumed during holographic recording. The gap layer $G_2$ with a thickness of more than 200 $\mu$m may invite reduced sensitivity or reduced multiplicity because the region of holographic recording layer during holographic recording becomes remote from the focus.

<Additional layers>

The additional layers are not particularly limited and can be appropriately selected depending on the intended purpose; examples thereof include an optical compensating layer that improves the optical characteristics of optical recording medium and a quarter wave plate.

(Method for producing optical recording medium)

The method for producing an optical recording medium of the invention is a method for producing the optical recording medium that comprises a servo substrate formed so that at least servo information is capable of being detected, on one surface side of the servo substrate, a first recording layer in which information is recorded by holography, a first top substrate, a first gap layer $G_1$, a first gap layer $G_2$, a first filter layer, and on the other surface side of the servo substrate, a second recording layer, a second top substrate, a second gap layer $G_1$, a second gap layer $G_2$, and a second filter layer; and that comprises additional layers on an as-needed basis. The method for producing an optical recording medium of the invention comprises a composition preparing step, a recording layer disposing step, a filter layer forming step, a gap layer $G_1$ forming step, a gap layer $G_2$ forming step, a laminate forming step and may further comprise additional steps appropriately selected on an as-needed basis.

Each step comprises steps in which the first and the second respective layers are formed, i.e., the first respective steps and the second respective steps. In the first respective steps, the first respective layers are formed, that is, the first recording layer, first top substrate, first gap layer $G_1$, first gap layer $G_2$, and first filter layer may be formed on one surface of the servo substrate. Further, in the second respective steps, the second respective layers are formed, that is, the second recording layer, second top substrate, second gap layer $G_1$, second gap layer $G_2$, and second filter layer may be formed on the other surface opposite to the one surface. Conversely, the second respective steps in which the second respective layers are formed are first performed and further the first respective steps in which the first respective layers are formed may be performed.

An optical recording medium having respective layers on both sides can be prepared by preparing two optical recording media that comprises the first servo substrate, first recording layer, first top substrate, first gap layer $G_1$, first gap layer $G_2$, and first filter layer through the first respective steps and then by joining the first servo substrates. The optical recording medium having respective layers on both sides can be also prepared through the second respective steps in the same way as performed in the first respective steps.

Preferably, each first and second layers or substrates, i.e. the first and second recording layers, the first and second top substrates, the first and second gap layers $G_1$'s, the first and second gap layers $G_2$'s, and the first and second filter layers, to be formed on one side and the other side of the servo substrate, respectively, are each formed so as to have the same shape, size, and thickness as each other. This is because if the focuses of information light, reference light and reproduction light on one side are different from those on the other side when performing one of recording and reproducing after reversing the optical recording medium, the need to adjust their focal distances arises, resulting in the reduction of the efficiency of recording and/or reproducing.

Hereinafter, each step of the method for producing the optical recording medium of the invention will be described step by step.

<Composition preparing step>

The composition preparing step is a step in which a composition for optical recording is prepared, where the composition for optical recording that contains a photopolymer consisting of a monomer, photoinitiator, sensitizer, oligomers, binder, and the like; and additional components appropriately selected on an as-needed basis is prepared by dissolving, dispersing, mixing, etc. with a solvent. The preparation is carried out under the conditions of, e.g. a temperature of 23°C and humidity of 10% and in an environment of low humidity dry.

<Recording layer disposing step>

The recording layer disposing step is not particularly limited and can be appropriately selected depending on the intended purpose. For example, the recording layer is disposed by one of the following two forms. In the first form, spacers are arranged on a top substrate, and the space formed by the spacers is filled with the composition for optical recording prepared in the composition preparing step. In the second form, spacers are arranged on the outermost layer of the servo substrate where the filter layer or, on the filter layer, a gap layer $G_2$ is disposed, and the space formed by the spacers is filled with the composition for optical recording prepared in the composition preparing step.

In any of the first form and the second form, when curing the filled recording layer by drying, the entire volume of the recording layer shrinks and the resulting shrinkage stress may deform the top substrate or the servo substrate.

Such deformed top substrate and servo substrate are eventually brought into contact with each other and combined. Thus, deform may be doubled.

When an optical recording medium in which such deformation has occurred is used for recoding and reproducing, surface wobble, which is a wobble in the thickness direction during the rotation of the optical recording medium, occurs, causing a recording error and reproducing error in recording and reproducing. In the recording layer disposing step of the invention, in order to prevent such surface wobble, the top substrate and the servo substrate, on which the recording layer is to be disposed, are formed so as to be thick, increasing the rigidity of the top substrate and the servo substrate and making it possible to maintain mechanical strength that allows for enduring the shrinkage stress of the recording layer.

-First form of recording layer disposing step-

As shown in FIGS. 12 through 15, in the first form, spacers 8 are arranged on a top substrate, and the space formed by the spacers is filled with the composition for optical recording prepared in the composition preparing step.

Initially, as shown in FIG. 12, an outer circumferential spacer 37 with the same outer shape as the top substrate 5 and a quadrangular cross-sectional shape is arranged on one surface of the disc-shaped top substrate 5 having an opening in the center thereof and bonded thereto with a UV adhesive. Further, an inner circumferential spacer 38 with the same cross-sectional shape as that of the outer circumferential spacer 37 having an opening in the center thereof with the same size as that of the opening of the top substrate 5 is arranged on the above-mentioned one surface of the top substrate 5 in such a way that the central axes of both openings match to each other and bonded thereto with a UV adhesive.

Next, as shown in FIG. 13, the composition solution for optical recording prepared in the composition preparing step is poured into the space formed by the outer circumferential spacer 37 and inner circumferential spacer 38.

As shown in FIG. 14, a laminate consisting of the top substrate 5, outer circumferential spacer 37, and inner circumferential spacer 38 is placed in an oven at 80°C for one hour keeping it horizontal to thereby cure the composition for optical recording.

Thereafter, as shown in FIG. 15, the servo substrate 1 on which a filter layer 6 is laminated is bonded to the laminate in the laminate forming step, which will be described later.

-Second form of recording layer disposing step-

As shown in FIGS. 16 through 19, in the second form, spacers are arranged on the outermost layer of the servo substrate where the filter layer or, on the filter layer, a gap layer $G_2$ is disposed, and the space formed by the spacers is filled with the composition for optical recording prepared in the composition preparing step.

Initially, as shown in FIGS. 16 and 17, an outer circumferential spacer 37 with the same outer shape as the servo substrate 1 and a quadrangular cross-sectional shape is arranged on the surface of the gap layer $G_2$ 7 of the disc-shaped servo substrate 1 over which a filter layer 6 and the gap layer $G_2$ 7 on the upper surface of the filter layer 6 are formed with a coating method, and bonded thereto with a UV adhesive. Further, an inner circumferential spacer 38 with the same cross-sectional shape as that of the outer circumferential spacer 37 having an opening in the center thereof with the same size as that of the opening of the servo substrate 1 is arranged on the surface of the gap layer $G_2$ 7 in such a way that the central axes of both openings match to each other and bonded thereto with a UV adhesive.

Next, as shown in FIG. 18, the composition solution for optical recording prepared in the composition preparing step is poured into the space formed by the outer circumferential spacer 37 and inner circumferential spacer 38.

Further, a laminate consisting of the servo substrate 1, outer circumferential spacer 37, and inner circumferential spacer 38 is placed in an oven at 80°C for one hour keeping it horizontal to thereby cure the composition for optical recording.

Thereafter, as shown in FIG. 19, a top substrate 5 is bonded to the laminate in the laminate forming step, which will be described later.

By the method described above, the laminate endures shrinkage stress of the recording layer, and curing occurs without deforming, resulting in the constant thickness. Thus, optical recording medium with high quality can be obtained.

<Spacer>

The spacer makes the thickness of the recording layer constant and an optical recording medium having very accurate thickness can be obtained. Besides, the use of the spacer can prevent moisture or harmful gas from entering from the edge of optical recording medium and the recording layer from drying.

The spacer includes an outer circumferential spacer and inner circumferential spacer. The outer circumferential spacer has almost the same outer shape as that of the optical recording medium and serves to make the thickness of

the outer circumferential portion of the recording layer constant. The inner circumferential spacer has almost the same opening as that provided in the center of the optical recording medium and serves to make the thickness of the inner circumferential portion of the recording layer constant together with the outer circumferential spacer.

The spacer of the invention means at least one of the outer circumferential spacer and the inner circumferential spacer. The outer circumferential spacer and inner circumferential spacer make it possible to prepare a recording layer with very accurate thickness.

-Outer circumferential spacer-

The shape of the outer circumferential spacer is not particularly limited as long as the outer circumference thereof is almost the same as the outer circumferential shape of optical recording medium, and can be appropriately selected depending on the intended purpose; examples thereof include quadrangle, circle, ellipse, and polygon. Among these, circle is preferable.

Examples of the cross-sectional shape of the outer circumferential spacer include quadrangle, rectangle, trapezoid, circle, and ellipse. Among these, quadrangle, trapezoid, and rectangle are preferable for achieving constant thickness. The spacer shown in FIG. 3 is an example of the spacer with a quadrangular cross-sectional shape.

The thickness of the outer circumferential spacer is not particularly limited and can be appropriately set depending on the intended purpose. For example, the outer circumferential spacer preferably has almost the same thickness as that of the recording layer, specifically,100 μm to 1,000 μm.

The width of the outer circumferential spacer is not particularly limited as long as it is at least 0.5 mm and can be appropriately set depending on the intended purpose. For example, the width of the outer circumferential spacer is preferably 0.5 mm to 5 mm, more preferably 0.5 mm to 3 mm, most preferably 0.5 mm to 2 mm. If the width is less than 0.5 mm, a retaining function for making the thickness of the recording layer constant may be deteriorated due to a reduced mechanical strength or supporting area. If the width is more than 5 mm, holographic recording region is narrowed, and recording capacity may be impaired.

The material for the outer circumferential spacer is not particularly limited. Inorganic and organic materials can be suitably used.

Examples of the inorganic materials include glass, ceramic, quartz and silicon.

The organic materials are not particularly limited and can be appropriately selected depending on the intended purpose. Examples of the organic materials, which are preferable in the light of their formability and cost, include acetate resins such as triacetylcellulose, polyester resins, polyethersulfone resins, polysulfone resins, polycarbonate resins, polyamide resins, polyimide resins, polyolefin resins, acrylic resins, polynorbornene resins, cellulose resins, polyarylate resins, polystyrene resins, polyvinylalcohol resins, polyvinyl chloride resins, polyvinylidene chloride resins, and polyacrylic resins. These may be used singly or in combination. Among these, polycarbonate resins and acrylic resins are preferable in light of their formability, peeling properties, and costs.

The method for producing the spacer is not particularly limited and can be appropriately selected depending on the intended purpose; examples thereof include injection molding, blow molding, compression molding, vacuum molding, extrusion molding, and cutting machining.

-Inner circumferential spacer-

The shape of the inner circumferential spacer is not particularly limited as long as the inner circumference thereof is almost the same as the shape of the opening which the optical recording medium is provided with, and can be appropriately selected depending on the intended purpose; examples thereof include quadrangle, circle, ellipse, and polygon. Among these, circle is preferable.

Preferably, the cross-sectional shape of the inner circumferential spacer is the same as that of the outer circumferential spacer; examples thereof include quadrangle, rectangle, trapezoid, circle, and ellipse. Among these, quadrangle, trapezoid, and rectangle are preferable for achieving constant thickness.

The thickness of the inner circumferential spacer is required to be the same as that of the outer circumferential spacer in terms of the uniformity of the thickness of the recording layer.

The width of the inner circumferential spacer may be the same as or different from that of the outer circumferential spacer in terms of function to retain the uniformity of the thickness of the recording layer and in terms of ensuring the recording region of the recording layer. The material for the inner circumferential spacer and the production method of the inner circumferential spacer may be different from or may be the same as those of the outer circumferential spacer.

<Filter layer forming step>

The filter layer forming step is a step in which the filter for optical recording medium of the invention is processed

into the optical recording medium shape, and the processed filter is bonded to the servo substrate to form a filter layer. The process for producing the filter for the optical recording medium of the invention is as described above. Note, however, that it is possible to directly form the filter layer on the substrate depending on the circumstances. For example, a coating solution for colored material-containing layer is applied onto the substrate to form a colored material-containing layer, and a dielectric thin film is formed on the colored material-containing layer by sputtering.

The shape of the optical recording medium is, for example, disc shape or card-like shape. The method for processing the filter into the optical recording medium shape is not particularly limited, and can be appropriately selected depending on the intended purpose. For example, a cutting process with a press cutter, or a stamping process with a stamping cutter can be used. The filter is bonded to the substrate by use of, for example, an adhesive or agglutinant while avoiding entry of air bubbles.

The adhesive is not particularly limited and can be appropriately selected depending on the intended purpose; examples thereof include UV curable adhesives, emulsion adhesives, one-component curable adhesives and two-component curable adhesives. These known adhesives can be used in any combination.

The agglutinant is not particularly limited and can be appropriately selected depending on the intended purpose; examples thereof include rubber agglutinants, acrylic agglutinants, silicone agglutinants, urethane agglutinants, vinylalkyl ether agglutinants, polyvinylalcohol agglutinants, polyvinylpyrrolidone agglutinants, polyacrylamide agglutinants and cellulose agglutinants.

The thickness of the adhesive or agglutinant applied is not particularly limited and can be appropriately set depending on the intended purpose. In the case of adhesive, the thickness is preferably 0.1 μm to 10 μm, more preferably 0.1μ m to 5 μm in light of the optical characteristics and slimness. In the case of agglutinant, the thickness is preferably 1 μm to 50 μm, more preferably 2 μm to 30 μm.

<Gap layer $G_1$ forming step>

The gap layer $G_1$ forming step is a step in which a gap layer $G_1$ is formed between the servo substrate and the filter layer. The method for forming the gap layer $G_1$ is not particularly limited and can be appropriately selected depending on the intended purpose. The gap layer $G_1$ can be formed on a servo substrate by, for example, the spin coating method, the method in which a sheet member is bonded, the vapor deposition, or the sputtering.

<Gap layer $G_2$ forming step>

The gap layer $G_2$ forming step is a step in which a gap layer $G_2$ is formed between the filter layer and the recording layer. The method for forming the gap layer $G_2$ is not particularly limited and can be appropriately selected depending on the intended purpose. The gap layer $G_2$ can be formed on the filter layer by, for example, laminating the transparent resin film, norbornene resin film, or the like.

<Laminate forming step>

The laminate forming step is a step in which the top substrate is bonded to the servo substrate over which the recording layer, the filter layer and gap layer $G_1$ are formed by the recording layer disposing step, the filter layer forming step, and the gap layer $G_1$ forming step to form a laminate and may comprise additional steps appropriately selected on an as-needed basis.

The method for bonding is not particularly limited and can be appropriately selected depending on the intended purpose. For example, the top substrate, the servo substrate, and additional layers on an as-needed basis are bonded with an adhesive, pressure bonded without using an adhesive, or bonded in vacuum.

The method for bonding with an adhesive is carried out as follows. Outer circumferences of the top substrate, the servo substrate, and additional layers on an as-needed basis are adjusted, an adhesive is applied between each layer and bonded at 23°C to 100°C with a pressure of 0.001 MPa to 0.5 MPa given from outside.

Bonding is preferably performed in vacuum for adhesion while avoiding generation of air bubbles during the bonding.

-Adhesive-

The adhesive is not particularly limited and can be appropriately selected depending on the intended purpose; examples thereof include acrylic adhesives, epoxy adhesives, and rubber adhesives.

Among these, acrylic adhesives and epoxy adhesives are preferable in terms of transparency, etc.

The method for pressure bonding without an adhesive can be carried out by allowing layers to adhere to each other utilizing adhesiveness of each layer to form a laminate. Outer circumferences of the top substrate, the servo

substrate, and additional layers on an as-needed basis are adjusted and bonded at 23°C to 100°C with a pressure of 0.001 MPa to 0.5 MPa given from outside. Bonding is preferably performed in vacuum for adhesion while avoiding entry of air bubbles during the adhesion.

<Additional step>

The additional step is not particularly limited and can be appropriately selected depending on the intended purpose; examples thereof include an optical compensating layer forming step to improve the optical characteristics, and a quarter wave plate forming step.

(Optical recording method and optical reproducing method; and optical recording apparatus and optical reproducing apparatus)

The optical recording method is not particularly limited and can be appropriately selected depending on the intended purpose. For example, the optical recording method uses the so-called collinear technology, where information light and reference light are applied onto the optical recording medium in such a way that the optical axis of the information light is collinear with that of the reference light, and optical interference between the information light and reference light creates an interference pattern, or information, to be recorded on a recording layer.

The optical reproducing method is not particularly limited and can be appropriately selected depending on the intended purpose. For example, the recorded information corresponding to the reference images can be reproduced by applying reproduction light, the same as the reference light, onto the interference images recorded on the recording layer using the optical recording method.

In the optical recording method and reproducing method in the second form, information light with a two-dimensional intensity distribution and reference light with an intensity level equal to that of the information light are superimposed inside a photosensitive recording layer to form an interference pattern, and an optical characteristic distribution is created by means of the interference pattern, whereby information is recorded in the recording layer. Meanwhile, upon reading (reproducing) of the written information, reproduction light, the same as the reference light, is applied onto the recording layer from the same direction, and thereby a diffracted ray is emitted from the recording layer as a light that has an intensity distribution corresponding to the optical characteristic distribution formed in the recording layer.

The optical recording method and optical reproducing method is performed by means of the optical recording apparatus and optical reproducing apparatus of the invention.

Hereinafter, the optical recording apparatus and optical reproducing apparatus will be described, by which the optical recording method and optical reproducing method will be also described.

<Optical recording and reproducing apparatus>

The optical recording and reproducing apparatus can be used in the optical recording method and reproducing method, and includes the optical recording apparatus and reproducing apparatus of the invention. The optical recording and reproducing apparatus comprises a focal distance-detecting unit configured to apply servo light onto one side of the optical recording medium of the invention and to detect a focal distance representing the distance between the focus of the servo light and a collective lens; a focal distance-controlling unit configured to control the focal distances along an optical axis direction of information light and reference light based on the detected focal distance of the servo light; an interference image-recording unit configured to create interference images by applying the information light and the reference light to thereby record the interference images on a recording layer; a medium-reversing unit configured to reverse the optical recording medium upside down such that information can be recorded by means of the interference image-recording unit on a recording layer on the side opposite to that of the recording layer on which the interference images have been recorded by the interference image-recording unit; and may further comprise additional units appropriately selected on as-needed basis.

Further, the optical recording and reproducing apparatus, which performs not only an optical recording but also an optical reproducing, comprises, in addition to the above-mentioned each unit, an interference image-reproducing unit configured to reproduce the recorded interference images by applying reproduction light, the same as the reference light used for recording, onto the optical recording medium where information has been recorded by means of the interference image-recording unit.

The interference image-recording unit is a unit configured to perform the optical recording method, and the interference image-reproducing unit is a unit configured to perform the optical reproducing method.

The medium-reversing unit is a unit configured to reverse an optical recording medium, after recording or reproducing information on one side of the optical recording medium, in order to record or reproduce information on the

other side.

The medium-reversing unit is not particularly limited and can be appropriately selected depending on the intended purpose; examples thereof include disc-reversing units known in the art, disc-reversing devises described in JP-A 11-259946, disc-reversing devises where a disc is reversed around the outer circumferential edge thereof as the rotating center and then is slid back, disc-reversing devises where a disc is slid horizontally and then is reversed around the outer circumferential edge thereof as the rotating center, and disc-reversing devises provided with a rotational mechanism at the position where a disc is positioned after reversing around the outer circumferential edge thereof as the rotating center.

The mechanism of the medium-reversing unit is not particularly limited and can be appropriately selected depending on the intended purpose; examples thereof include a mechanism in which a disc is reversed with a clamp portion at an inner circumferential portion of a disc chucked, a mechanism in which a disc is reversed with the outer circumferential edge of a disc held, and a mechanism in which a disc is reversed with the edge of inner circumferential hole of a disc held.

Among these, a mechanism in which a disc is reversed with a clamp portion at an inner circumferential portion of a disc chucked is most preferable in that a disc can be retained easily as well as strongly.

A specific mechanism of the medium-reversing unit is, for example, as follows. As shown in FIG. 10, a central opening 21a of an optical recording medium 21 is moved in the arrow direction, inserted into an optical recording medium holder 25, and retained by a clamp 25a. Then, a rotation arm 26 supported by a chassis 27 and connected with a rotary shaft 28 is rotated by a drive device (not shown) in the arrow direction by 180°, and the retained optical recording medium 21 is reversed upside down. The reversed optical recording medium 21 is set to the optical recording and reproducing apparatus again. As shown in FIG. 11, when the optical recording medium 21 is rotated by 180°, the optical recording medium 21 is reversed upside down, as a result, information can be recorded by means of the interference image-recording unit on a recording layer on the side opposite to that of the recording layer on which the interference images have been recorded by the interference image-recording unit.

The medium-reversing unit may be externally connected to the optical recording apparatus or may be part of the recording apparatus. The optical recording medium reversed by means of the medium-reversing unit is attached to the disc holding portion of the optical recording apparatus.

The focal distance-detecting unit is not particularly limited and can be appropriately selected depending on the intended purpose; examples thereof include capacity detection methods, optical detection methods such as a grazing incidence method, pinhole method, wobbling method, astigmatic method, knife edge method, wedge prism method, and critical angle method.

The specific method of the focal distance-detecting unit is not particularly limited and can be appropriately selected depending on the intended purpose; examples thereof include a main beam grazing incidence method, separate beam grazing incidence method, half flux method, two pinhole method, sharpness detection method, one pinhole method, light source wobble method, and objective lens wobble method.

Among these, the knife-edge method and astigmatic method are most preferable in that the optical system is simple, sensitivity is high, and error can be detected in a wide range.

The focal distance-controlling unit is not particularly limited and can be appropriately selected depending on the intended purpose; examples thereof include aerodynamic units and electromagnetic units.

The specific method of the focal distance-controlling unit is not particularly limited and can be appropriately selected depending on the intended purpose; examples thereof include a method in which the distance between a collective lens and a disc is controlled by airflow, and a method in which a focal difference is detected by means of the focal distance-detecting unit and a collective lens is electromagnetically controlled by e.g. a coil or piezo element.

Among these, a method in which a collective lens is electromagnetically controlled by a coil is most preferable from the point that the mechanism is simple, operating range is wide, and control accuracy is high.

The additional units are not particularly limited and can be appropriately selected depending on the intended purpose; examples thereof include a rotation direction-recognizing unit configured to recognize the rotation direction of optical recording medium.

The rotation direction-recognizing unit is equipped with a circuit that recognizes forward or reverse of the rotation direction of optical recording medium, and is required when a servo pit pattern is formed only on one surface of the servo substrate. Specifically, the servo pit pattern is formed in such a way that the servo pit pattern can be used in any of a case where the information light and reference light are applied from the front side and a case where applied from the back side. Thus, for example, when the information light and reference light are applied from the front side, the direction of rotation of the optical recording medium is defined as a forward direction. When the information light and reference light are applied from the back side, the rotation of the optical recording medium is detected as a reverse direction. Thus, when an optical recording has been reversed upside down, the rotation direction-recognizing unit that recognizes the rotation direction as a reverse direction is required at the time of detecting the servo pit pattern in the optical recording apparatus and optical reproducing apparatus.

The optical recording and reproducing apparatus used for the optical recording method and reproducing method will be described with reference to FIG. 9.

FIG. 9 is a block diagram showing an example of the entire configuration of the optical recording and reproducing apparatus. Note that this apparatus includes an optical recording apparatus and a reproducing apparatus. The optical recording and reproducing apparatus 100 includes a spindle 81 to which an optical recording medium 21 is attached, a spindle motor 82 for spinning the spindle 81, and a spindle servo circuit 83 for controlling the spindle motor 82 so that the rotation speed of the optical recording medium 21 is constant at a predetermined level.

In addition, the optical recording and reproducing apparatus 100 includes a pickup 31 which applies information light and recording reference light onto the optical recording medium 21, and applies reproduction light, the same as the reference light, onto the optical recording medium 21 to detect a diffracted ray for the reproduction of information recorded in the optical recording medium 21, and a drive device 84 that enables the pickup 31 to move in the radial direction of the optical recording medium 21.

The optical recording and reproducing apparatus 100 includes a detection circuit 85 for detecting a focus error signal FE, a tracking error signal TE and a reproduction signal RF from the output signal of the pickup 31, a focus servo circuit 86 for performing a focus servo operation by driving an actuator inside the pickup 31 on the basis of the focus error signal FE detected by the detection circuit 85 to move an objective lens (not shown) in the thickness direction of the optical recording medium 21, a tracking servo circuit 87 for performing a tracking servo operation by driving an actuator inside the pickup 31 on the basis of the tracking error signal TE detected by the detection circuit 85 to move the objective lens in the radial direction of the optical recording medium 21, and a slide servo circuit 88 for performing a slide servo operation by controlling the drive device 84 on the basis of a tracking error signal TE and commands from a controller to be described later to move the pickup 31 in the radial direction of the optical recording medium 21.

Furthermore, the optical recording and reproducing apparatus 100 includes a signal processing circuit 89 which decodes output data from a CMOS or CCD array to be described later in the pickup 31 to reproduce data recorded on the data area of the optical recording medium 21; which creates a reference clock on the basis of a reproduction signal RF detected by the detection circuit 85; and which distinguishes individual addresses, a controller 90 for controlling overall of the optical recording and reproducing apparatus 100, and a operation unit 91 for giving a variety of commands to the controller 90.

The controller 90 receives the reference clock and address information outputted from the signal processing circuit 89 and controls, for example, the pickup 31, spindle servo circuit 83 and slide servo circuit 88. The spindle servo circuit 83 receives the reference clock outputted from the signal processing circuit 89. The controller 90 includes a CPU (central processing unit), ROM (read only memory) and RAM (random access memory), and the CPU realizes the function of the controller 90 by executing programs stored in the ROM on the RAM, a working area.

Further, the optical recording and reproducing apparatus 100 comprises a medium-reversing mechanical section (not shown) by which an optical recording medium is reversed upside down when recording is further performed on the other side after recording has been performed on one side of optical recording medium. The optical recording and reproducing apparatus 100 is constructed such that when reproducing information on the other side after reproducing on one side, as in the case of recording, the optical recording medium is reversed upside down by the medium-reversing mechanical section. When the optical recording medium is reversed upside down by the medium-reversing mechanical section, the focal distance-detecting unit detects an appropriate position, at which information is to be recorded, of the optical recording medium, and the focal distance-controlling unit moves the focal distances of the information light and reference light so that information is recorded at an appropriate position to be recorded.

Hereinafter, specific examples 1 to 3 of the optical recording medium of the invention will be described in detail with reference to the drawings.

<Specific example 1 of optical recording medium>

FIG. 4 is a schematic cross-sectional view showing the structure of the optical recording medium 21 of specific example 1 in the invention. In an optical recording medium 21 according to this specific example 1 servo pit patterns 3 and 3a are formed on a servo substrate 1 made of polycarbonate resin or glass, and the serve pit patterns 3 and 3a are coated with Al, Au, Pt or the like to form reflective films 2 and 2a. Although the servo pit patterns 3 and 3a are formed on the entire surface of the servo substrate 1 in FIG. 4, it may be formed on the servo substrate 1 periodically as shown in FIG. 1. In addition, the height of the servo pit patterns 3 and 3a is generally 1,750 angstrom (175 nm), far smaller than those of the other layers, including substrates.

A first gap layer $G_1$ 8 and second gap layer $G_1$ 8a are formed by applying a material such as a UV curable resin on the reflective films 2 and 2a of servo substrate 1 by spin coating or the like. The first gap layer $G_1$ 8 and second gap layer $G_1$ 8a protect the reflective films 2 and 2a. At the same time, the first gap layer $G_1$ 8 and second gap layer $G_1$ 8a are effective to adjust the size of holograms formed in the first recording layer 4 and second recording layer 4a. Specifically, since somewhat large regions where optical interference between information light and recording reference

light takes place need to be secured in the first recording layer 4 and second recording layer 4a, it is effective to provide the gap layer between the recording layer and the servo pit pattern 4 and 3, 4a and 3a.

A first filter layer 6 is provided on the first gap layer $G_1$ 8, and further second filter layer 6a is provided on the second gap layer $G_1$ 8a. In addition, a first gap layer $G_2$ 7 is provided between the first filter layer 6 and first recording layer 4, and further a second gap layer $G_2$ 7a is provided between the second filter layer 6a and second recording layer 4a. As shown in FIGS. 3 and 4, the first gap layer $G_2$ 7 and first recording layer 4 are sandwiched between the first filter layer 6 and a first top substrate 5 (a polycarbonate resin substrate or glass substrate), and further the second gap layer $G_2$ 7a and second recording layer 4a are sandwiched between the second filter layer 6a and a second top substrate 5a to constitute the optical recording medium 21 in which each layer is disposed on both sides of the servo substrate 1.

There is a point at which both information light and reference light focus; if this area is embedded in photopolymers, excessive exposure takes places and thus an excess amount of monomers are consumed, leading to poor multiplexing recording performance. To avoid this, it is effective to provide a transparent, inert first gap layer $G_2$ 7 and second gap layer $G_2$ 7a.

In FIG. 4 the first filter layer 6 and second filter layer 6a admit only red light and reflects light of the other colors. Therefore, the information light and recording and reproduction light do not pass through the first filter layer 6 and second filter layer 6a because they are light of green or blue, and never reach the reflective films 2 and 2a, becoming returning light emitting from one of the first top substrate and second top substrate as the light entrance/ exit surface.

The first filter layer 6 and second filter layer 6a are constituted of three cholesteric liquid crystal layers whose helical pitch is continuously changed in the thickness direction thereof. The first filter layer 6 and second filter layer 6a may be directly provided on the first gap layer $G_1$ 8 and second gap layer $G_1$ 8a with a coating method, or may be provided by stamping a film in which a cholesteric liquid crystal layer is formed on a base material into the optical disc shape. By using such three cholesteric liquid crystal layers, reflectivity of 40% or more can be realized for light of a wavelength range of $\lambda_0$ to $\lambda_0$/cos20°, especially $\lambda_0$ to $\lambda_0$/cos40° (where $\lambda_0$ represents the wavelength of irradiation light), thereby eliminating the fluctuations in the selectively-reflecting wavelength range even when the incident angle has changed.

The optical recording medium 21 of specific example 1 may be a disc shape or card-like shape. There is no need to provide a servo pit pattern in a case where the optical recording medium 21 is a card-like shape. In the optical recording medium 21 the servo substrate 1 is 0.6 mm in thickness, the first gap layer $G_1$ 8 is 100 $\mu$m in thickness, the second gap layer $G_1$ 8a is 100 $\mu$m in thickness, the first filter layer 6 is 2 $\mu$m to 3 $\mu$m in thickness, the second filter layer 6a is 2 $\mu$m to 3 $\mu$m in thickness, the first gap layer $G_2$ 7 is 70 $\mu$m in thickness, the second gap layer $G_2$ 7a is 70 $\mu$m in thickness, the first recording layer 4 is 0.6 mm in thickness, the second recording layer 4a is 0.6 mm in thickness, the first top substrate 5 is 0.6 mm in thickness, and the second top substrate 5a is 0.6 mm in thickness, bringing to the total to about 3.4 mm.

Next, optical operations around the optical recording medium 21 will be described with reference to FIG. 8. In the optical recording medium 21, layers are formed on both sides in the same way, and optical operations are performed on respective sides in the same way. On one side, first, red light emitted from the servo laser source is reflected by a dichroic mirror 13 by almost 100%, and passes through an objective lens 12. By this, the servo light is applied onto the optical recording medium 21 in such a way that it focuses on the reflective film 2. More specifically, the dichroic mirror 13 is so configured that it admits only green or blue light but reflects almost 100% of red light. The servo light incident from the light entrance/exit surface A of the optical recording medium 21 passes through the first top substrate 5, first recording layer 4, first gap layer $G_2$ 7, first filter layer 6 and first gap layer $G_1$ 8, is reflected by the reflective film 2, and passes again through the first gap layer $G_1$ 8, first filter layer 6, first gap layer $G_2$ 7, first recording layer 4 and first top substrate 5 to emit from the light entrance/exit surface A. The returning servo light passes through the objective lens 12 and is reflected by the dichroic mirror 13 by almost 100%, and then a servo information detector (not shown) detects servo information in the returning servo light. The detected servo information is used for the focus servo operation, tracking servo operation, slide servo operation, and the like. The holographic material constituting the first recording layer 4 is designed so as not to be sensitive to red light. For this reason, even when the servo light has passed through the first recording layer 4 or has been reflected diffusively by the reflective film 2, the first recording layer 4 is not adversely affected. In addition, the returning servo light that has been reflected by the reflective film 2 is reflected by the dichroic mirror 13 by almost 100%. Accordingly, the servo light is not detected by a CMOS sensor or CCD 14 used for the detection of reconstructed images, and thus does not interfere with the operation of a diffracted ray.

Note that with respect to the reflection range of $\lambda_0$ to $1.3\lambda_0$, $1.3\lambda_0$ shown in FIG. 7, $1.3\lambda_0$ equals to 692 nm when $\lambda_0$ is 532 nm, and thus servo light of wavelength 655 nm is undesirably reflected. This reflection range is set in view of light incident at an angle of ±40°. However, when such light that is incident at larger angles is intended to be used, a servo operation can be performed without causing any problems by using servo light incident at an angle of within ±20° that has been masked. In addition, by securing larger helical pitch in the cholesteric liquid crystal layer in the filter layer used, it is also possible to readily cover servo light incident to the filter layer at an angle of within ±20°. In that case, it is only necessary to prepare a cholesteric liquid crystal layer with a reflection range of $\lambda_0$ to $1.1\lambda_0$. Thus,

transmittance of the servo light entails no difficulty.

Both the information light and recording reference light generated in the recording/reproduction laser source pass through a polarizing plate 16 and are linearly polarized. The linearly polarized lights then pass through a half mirror 17 and are circularly polarized after passing through a quarter wave plate 15. The circularly polarized lights then pass through the dichroic mirror 13 and the objective lens 12, and are applied onto the optical recording media 21 in such a way that optical interference takes place between the information light and recording reference light to create interference patterns in the first recording layer 4. The information light and recording reference light are incident from the light entrance/exit surface A and interact with each other in the first recording layer 4 to form an interference pattern there. Thereafter, the information light and recording reference light pass through the first recording layer 4, launching into the first filter layer 6. There, before reaching the bottom of the first filter layer 6, the lights are reflected and become returning lights. More specifically, the information light and recording reference light do not reach the reflective film 2. This is because the first filter layer 6 is formed of three cholesteric liquid crystal layers whose helical pitch is continuously changed in the thickness direction thereof, and admits only red light. Moreover, if the intensity of light that has undesirably passed through the first filter layer is suppressed to 20% or less of that of the incident light, there will be no practical problems even when such light reaches the bottom of the first filter layer and is reflected back as a returning light, because this returning light is again reflected by the first filter layer and its intensity in a diffracted ray is as small as 4% (20% $\times$ 20%) or less of that of the incident light.

When all operations on the foregoing one side have been completed, the optical recording medium 21 is reversed upside down and detection of servo information by servo light, which has been carried out on the one side, is further carried out on the other side. Based on the results of the detection of servo information, information is recorded on a second recording layer 4a by means of the information light and reference light for recording.

<Specific example 2 of optical recording medium>

FIG. 5 is a schematic cross-sectional view showing the structure of the optical recording medium 22 of specific example 2. This optical recording medium 22 according to specific example 2 is similar to that of specific example 1 except that a servo pit pattern 3 and reflective film 2 are formed on one surface of the servo substrate 1.

Optical operations around the optical recording medium 22 are also performed in a similar way as those around the optical recording medium 21. However, operations around the optical recording medium 22 are different in that the direction of rotation of the optical recording medium 22 is modified so that the optical recording medium is rotated in the opposite direction. Specifically, when all operations on one side have been completed, the optical recording medium 22 is reversed upside down in the same way as in specific example 1. When detection of servo information by servo light, which has been carried out on the one side, is further carried out on the other side, the servo pit pattern 3, the same one as used on one side, is used. Thus, the servo information is detected as such information that causes the optical recording medium 22 to be rotated in a reverse direction. Thus, the direction of rotation of the optical recording medium 22 is modified.

The optical recording medium 22 of specific example 2 may be a disc shape or card-like shape. There is no need to provide a servo pit pattern in a case

where the optical recording medium 22 is a card-like shape. In the optical recording medium 22 the servo substrate 1 is 0.6 mm in thickness, the first gap layer $G_1$ 8 is 100 $\mu$m in thickness, the second gap layer $G_1$ 8a is 100 $\mu$m in thickness, the first filter layer 6 is 2 $\mu$m to 3 $\mu$m in thickness, the second filter layer 6a is 2 $\mu$m to 3 $\mu$m in thickness, the first gap layer $G_2$ 7 is 70 $\mu$m in thickness, the second gap layer $G_2$ 7a is 70 $\mu$m in thickness, the first recording layer 4 is 0.6 mm in thickness, the second recording layer 4a is 0.6 mm in thickness, the first top substrate 5 is 0.6 mm in thickness, and the second top substrate 5a is 0.6 mm in thickness, bringing to the total to about 3.4 mm.

<Specific example 3 of optical recording medium>

FIG. 6 is a schematic cross-sectional view showing the structure of the optical recording medium 23 of specific example 3. This optical recording medium 23 according to specific example 3 is similar to that of specific example 1 except that the optical recording medium 23 is prepared by by joining servo substrates 1 of two optical recording media, in which respective layers are formed only on one surface of the servo substrate 1.

Optical operations around the optical recording medium 23 and optical operations after the reverse of optical recording medium are also performed in a similar way as those around the optical recording medium 21 and as in specific example 1, respectively.

The optical recording medium 23 of specific example 3 may be a disc shape or card-like shape. There is no need to provide a servo pit pattern in a case where the optical recording medium 23 is a card-like shape. In the optical recording medium 23 the servo substrate 1 is 1.2 mm in thickness, the first gap layer $G_1$ 8 is 100 $\mu$m in thickness, the second gap layer $G_1$ 8a is 100 $\mu$m in thickness, the first filter layer 6 is 2 $\mu$m to 3 $\mu$m in thickness, the second filter layer

6a is 2 μm to 3 μm in thickness, the first gap layer $G_2$ 7 is 70 μm in thickness, the second gap layer $G_2$ 7a is 70 μm in thickness, the first recording layer 4 is 0.6 mm in thickness, the second recording layer 4a is 0.6 mm in thickness, the first top substrate 5 is 0.6 mm in thickness, and the second top substrate 5a is 0.6 mm in thickness, bringing to the total to about 4.0 mm.

Examples

Hereinafter, Examples of the invention will be described, which however shall not be construed as limiting the invention thereto.

(Example 1)

<Preparation of optical recording medium>

The optical recording medium of Example 1 was prepared in the following way by preparing two optical recording media in which a first top substrate, first recording layer, first gap layer $G_2$, first filter layer, first gap layer $G_1$, and servo substrate are disposed in this order, and then by joining the surfaces of the servo substrates of these two optical recording media. The first filter layer was formed in the following way by preparing a film-shaped filter and laminating it. The first recording layer is constructed such that the thickness thereof is retained by the outer circumferential spacer and inner circumferential spacer.

-Components of composition solution for optical recording layer-

A composition solution for optical recording layer having the following components was prepared.

- Di(urethaneacrylate) oligomer (ALU-351, produced by Echo Resins Corp.) ... 59 Parts by mass
- Isobornylacrylate 30 Parts by mass
- Vinylbenzoate 10 Parts by mass
- Polymerization initiator (IRGA CURE 784, produced by Ciba Specialty Chemicals) 1 Part by mass

-Preparation of filter-

Initially, polyvinyl alcohol (bland name: MP 203, produced by Kuraray Co., Ltd.) was applied on a polycarbonate film of 100 μm thickness (bland name: lupilon, produced by Mitsubishi Gas Chemical Company Inc.) to the thickness of 1μ m to prepare a base film. The surface of the polyvinyl alcohol film was rubbed by passing this base film through a rubbing device, by which capability to align liquid crystal molecules can be provided.

Next, coating solutions A, B, and C for cholesteric liquid crystal layer having the components shown in Table 1 below were prepared by a conventional method.

Table 1

| Component (parts by mass) | Coating solution for cholesteric liquid crystal layer | | |
|---|---|---|---|
| | A | B | C |
| UV polymerizable liquid crystal compound | 93.16 | 94.02 | 94.74 |
| Chiral compound | 6.84 | 5.98 | 5.26 |
| Photoinitiator | 0.10 | 0.10 | 0.10 |
| Sensitizer | 0.02 | 0.02 | 0.02 |
| Solvent | 400 | 400 | 400 |

* UV polymerizable liquid crystal compound: PALIOCOLOR LC242 (bland name, produced by BASF Corp.)
* Chiral compound: PALIOCOLOR LC756 (bland name, produced by BASF Corp.)
* Photoinitiator: IRGACURE 369 (bland name, produced by Ciba Specialty Chemicals)
* Sensitizer: diethylthioxanthone
* Solvent: methyl ethyl ketone (MEK)

Next, the coating solution A for cholesteric liquid crystal layer was applied on the base film with a bar coater, dried, and then aligned and ripened at 110°C for 20 seconds. Thereafter, the resulting liquid crystal was exposed to light under 110°C with an ultrahigh-pressure mercury vapor lamp at an irradiation energy of 500 mJ/cm$^2$ to form a 2 μm thick cured film as a cholesteric liquid crystal layer A.
Next, the coating solution B for cholesteric liquid crystal layer was applied on the cholesteric liquid crystal layer A with a bar coater, dried, and then aligned and ripened at 110°C for 20 seconds. Thereafter, the resulting liquid crystal was exposed to light under 110°C with an ultrahigh-pressure mercury vapor lamp at an irradiation energy of 500 mJ/cm$^2$ to form a 2 μm thick cured film as a cholesteric liquid crystal layer B.
Next, the coating solution C for cholesteric liquid crystal layer was applied on the cholesteric liquid crystal layer B with a bar coater, dried, and then aligned and ripened at 110°C for 20 seconds. Thereafter, the resulting liquid crystal was exposed to light under 110°C with an ultrahigh-pressure mercury vapor lamp at an irradiation energy of 500 mJ/cm$^2$ to form a 2 μm thick cured film as a cholesteric liquid crystal layer C.
In this way, a three-layered filter for optical recording medium of Example 1 was prepared that has circularly polarizing characteristic, wherein each cholesteric liquid crystal layer has a different λ value and the helices rotate in the same, right-handed direction.
Next, the resultant filter for optical recording medium was stamped into a disc shape of predetermined size, so that the filter could be arranged on the substrate.

-First top substrate-

For the first top substrate, a polycarbonate resin substrate of 120 mm in diameter and 0.6 mm in thickness was used that is generally used for DVD+RW. The surface of the substrate used was smooth and concavo-convex pattern such as a servo pit pattern was not formed thereon.

-Servo substrate-

For the servo substrate, a polycarbonate resin substrate of 120 mm in diameter and 0.6 mm in thickness was used that is generally used for DVD+RW. A servo pit pattern was formed all over the surface of the substrate, with the track pitch being 0.74 μm, the groove depth 175 nm, and groove width 300 nm. Further, a reflective film made of aluminum (Al) was deposited on the surface of the servo pit pattern of the servo substrate to the thickness of 200 nm with a DC magnetron sputtering method.

-First gap layer $G_1$-

--Preparation of coating solution for first gap layer $G_1$--

SD-640 (produced by Dainippon Ink and Chemicals Inc.) was used, dissolved, and dispersed to prepare a coating solution for first gap layer $G_1$.
The resulting coating solution for first gap layer $G_1$ was applied on the surface of the reflective film of the servo substrate, on which an Al reflective film was formed, by spin coating using a spin coater (model name:1H-B7, produced by Mikasa Co., Ltd.) operated at 1,500 rpm for 15 seconds, and was cured by UV irradiation with 1,500 mJ/cm$^2$ at a temperature of 23°C. The cured film thickness was 25 μm. This operation was repeated three times and the total film thickness was 75 μm.

-First gap layer $G_2$-

A 100 μm thick polycarbonate film was used as the first gap layer $G_2$.

-Outer circumferential spacer

The outer circumferential spacer had a circular shape with a diameter of 120 mm, the same outer shape as those of the first top substrate and servo substrate, a width of 0.5 mm±100 μm in a surface direction, a thickness of 500 μm, the same thickness as that of the first recording layer 4. Thus, the cross-sectional shape is quadrangle with 0.5 mmx500 μm.
The outer circumferential spacer was prepared by an injection molding machine (produced by Sumitomo Heavy Industries, Ltd.) using polycarbonate with excellent moldability and mechanical strength.

-Inner circumferential spacer-

As shown in FIG. 3, the inner circumferential spacer had a circular shape with a diameter of 15 mm, the same as the opening diameter of openings 5b and 1b of the first top substrate 5 and first servo substrate 1, a width of 0.5 mm$\pm$100 $\mu$m in a surface direction, a thickness of 500 $\mu$m, the same thickness as that of the first recording layer 4. Thus, the cross-sectional shape is quadrangle with 0.5 mmx500 $\mu$m, the same as that of the outer circumferential spacer.

The inner circumferential spacer was prepared by an injection molding machine (produced by Sumitomo Heavy Industries, Ltd.) using polycarbonate with excellent moldability and mechanical strength, the same as that used for the outer circumferential spacer.

-Formation of laminate-

As shown in FIG. 17, the filter was laminated over the first servo substrate 1 spin-coated with a first gap layer $G_1$ 8, after applying an adhesive (SD-640, produced by Dainippon Ink and Chemicals Inc.) while avoiding entry of air bubbles, and thereby a first filter layer 6 was formed. Then, a first gap layer $G_2$ 7 was bonded on the first filter layer 6 with a laminating apparatus (model name: HAL 110aa, produced by Sankyo Co., Ltd.) under the conditions of a pressure-roller temperature of 23°C, pressure-roller pressure of 0.1 MPa and bonding speed of 1.0 m/min.

Further, as shown in FIG. 18, the resulting outer circumferential spacer 37 was bonded to the surface of the first gap layer $G_2$ 7 so that the outer shape of the outer circumferential spacer 37 matched to that of the first servo substrate 1, and further an inner circumferential spacer 38 was bonded to the surface of the first gap layer $G_2$ 7 so that the center of the inner circumferential spacer matched to that of the first servo substrate 1. A UV adhesive (SD-640, produced by Dainippon Ink and Chemicals Inc.) was used as the adhesive.

The resulting coating solution of composition for optical recording layer was poured into the space with a depth of 500 $\mu$m formed by the outer circumferential spacer 37 and inner circumferential spacer 38.

The pouring was performed under the conditions of a temperature of 23°C, a liquid viscosity of 300 mPas, and a humidity of 50%.

After the pouring, the composition for optical recording layer was cured under the conditions of a temperature of 80°C and for 40 minutes to thereby form a first recording layer 4. The thickness of the first recording layer 4 was 500 $\mu$m.

The recording layer is formed in the space formed by the outer circumferential spacer 37 and inner circumferential spacer 38 of the invention. Thus, the first recording layer 4 has very accurate thickness and the thickness thereof is retained to a certain thickness.

An adhesive (GM-9002, produced by Blenny Giken Ltd.) was laminated on the first recording layer 4, a first top substrate 5 was arranged thereon, and outsides of the first top substrate 5 and the servo substrate 1 were pressurized at a pressure of 0.08 MPa at 80°C for 40 minutes to form a laminate. After drying and curing, two optical recording media were prepared.

The servo substrates 1 of the resulting optical recording media were brought into contact with each other so that the outer shapes and inner diameters thereof matched to each other, and were bonded to each other by use of an adhesive. An adhesive (GM-9002, produced by Blenny Giken Ltd.) was used as the bonding material. The outermost layer of each optical recording medium was pressurized at a pressure of 0.08 MPa at 80°C for 40 minutes to prepare the optical recording medium of Example 1 having the same structure as that of the optical recording medium 23 shown in FIG. 6. The thickness of the optical recording medium was 4.0 mm.

-Recording and evaluation of optical recording medium-

A series of multiplexing hologram was written into the resulting optical recording medium using collinear hologram recording and reproducing tester SHOT-1000 produced by Pulstec Industrial Co., Ltd., wherein the size of recording spot at a focus position of recorded hologram was 200 $\mu$m in diameter, and sensitivity (recording energy) and multiplexing number were measured and evaluated. Results are shown in Table 2.

-Measurement of sensitivity-

Variation of error probability of reproduction signal (BER: Bit Error Rate) was measured by changing the power of the irradiating light (mJ/cm$^2$) during recording). Normally, with the increase of recording-light power, the luminance of reproduction signal increases, and with the increase of the luminance of reproduction signal, the BER of reproduction signal tends to reduce gradually. Minimum recording-light power at which almost satisfactory reconstructed images (BER $< 10^{-3}$) are obtained was defined as the recording sensitivity of recording material. As a result, BER $< 10^{-3}$ was obtained with a recording-light power of 150 mJ/cm$^2$ (Recording sensitivity: 75 mJ/cm$^2$). Results are shown in Table 2.

-Evaluation of multiplexing number-

The multiplicity of optical recording medium was evaluated using a technique in which recording spots are shifted spirally to perform evaluation, described in ISOM'04, Th-J-06, pp. 184-185, Oct. 2004. Here, the number of holograms recorded, and recording pitch was 11x11=121 holograms and 28.5 μm, respectively. The multiplicity at the last 121st hologram recording is 49. With the increase of the number of holograms recorded, the multiplicity increases. Thus, if the multiplexing characteristics of recording material are insufficient, BER increases with the increase of the number of recording. The number of holograms recorded when BER exceeds $10^{-3}$ (BER > $10^{-3}$) was defined as multiplexing characteristics M of material. Using this technique, it was confirmed that as the multiplexing characteristics M, characteristics corresponding to 121 multiplexing could be obtained.

-Measurement of rate of increase of recording capacity-

The rate of increase of recording capacity was determined by expressing the increased amount of recording capacity of the optical recording medium of the invention in percentage based on the recording capacity of conventional optical recording media in which respective layers are formed on one side. Results are shown in Tables 2.

(Example 2)

The optical recording medium of Example 2 having the same structure as that of the optical recording medium 21 shown in FIG. 4 was prepared in the same way as in Example 1, except that a first gap layer $G_1$ 8, first filter layer 6, first gap layer $G_2$ 7, first recording layer 4, first top substrate 5 were formed in this order on one side of a servo substrate 1 provided with servo pit patterns 3 and 3a on both surfaces, and a second gap layer $G_1$ 8a, second filter layer 6a, second gap layer $G_2$ 7a second recording layer 4a, second top substrate 5a were formed in this order on the other side of the servo substrate 1 instead of the optical recording medium having the structure shown in FIG. 6 prepared by preparing two optical recording media and bonding surfaces of servo substrate to each other in Example 1. Recording sensitivity, multiplexing characteristics, and rate of increase of recording capacity were evaluated. The thickness of the optical recording medium was 3.4 mm. Results are shown in Table 2.

(Example 3)

The optical recording medium of Example 3 having the same structure as that of the optical recording medium 22 shown in FIG. 5 was prepared in the same way as in Example 1, except that a first gap layer $G_1$ 8, first filter layer 6, first gap layer $G_2$7, first recording layer 4, first top substrate 5 were formed in this order on one side of a servo substrate 1 provided with a servo pit pattern 3 on one surface, and a second gap layer $G_1$ 8a, second filter layer 6a, second gap layer $G_2$ 7a, second recording layer 4a, second top substrate 5a were formed in this order on the other side of the servo substrate 1 instead of the optical recording medium having the structure shown in FIG. 6 prepared by preparing two optical recording media and bonding surfaces of servo substrate to each other in Example 1. Recording sensitivity, multiplexing characteristics, and rate of increase of recording capacity were evaluated. Results are shown in Table 2. The thickness of the optical recording medium was 3.4 mm.

(Comparative Example 1)

The optical recording medium of Comparative Example 1 was prepared in the same way as in Example 1, except that instead of the optical recording medium having the structure shown in FIG. 6 prepared by preparing two optical recording media and bonding surfaces of servo substrate to each other in Example 1, one of two optical recording media was used as the optical recording medium of Comparative Example 1. Recording sensitivity, multiplexing characteristics, and rate of increase of recording capacity were evaluated. Results are shown in Table 2.

Table 2

| | Form of optical recording medium | Thickness of optical recording medium (mm) | Increase rate of recording capacity of optical recording medium (%) | Recording sensitivity ($mJ/cm^2$) | Multiplexing characteristics M |
|---|---|---|---|---|---|
| Example 1 | Back surfaces of two optical recording media are bonded | 4.0 | 100 | 70-80 | 120 |
| Example 2 | Respective layers are formed on both sides of servo substrate provided with servo pit patterns on both surfaces | 3.4 | 100 | 70-80 | 120 |
| Example 3 | Respective layers are formed on both sides of servo substrate provided with a servo pit pattern on one surface | 3.4 | 100 | 70-80 | 120 |
| Comp. Example 1 | One optical recording medium | 2.0 | 0 | 70-80 | 120 |

The results of Table 2 indicate that according to the invention, the optical recording media of Examples 1 to 3 have the same levels of recording sensitivity and multiplexing characteristics as those of recording sensitivity and multiplexing characteristics of the optical recording medium of Comparative Example 1, but that the optical recording media of Examples 1 to 3 is 1.7 times to 2.0 times as thick as that of Comparative Example 1 and have a rate of increase of recording capacity of 100%. In Examples 1 to 3, remarkable improvement has been achieved on the increase of recording capacity of optical recording medium.

The invention can solve conventional problems and can provide an optical recording medium which can achieve doubled recording capacity on the optical recording medium including a recording layer for recording information by holography and which is high quality, and a method for producing an optical recording medium that can produce such optical recording medium efficiently; and can provide an optical recording apparatus and optical reproducing apparatus that are compatible with the optical recording medium.

The optical recording medium of the invention can double recording capacity and is high quality; and is widely used, for example, for relatively thin, flat holograms for recording two-dimensional information, for volume holograms for recording much three-dimensional information such as stereoimages, and for reflective holograms.

The optical recording apparatus of the invention can record information efficiently on the optical recording medium which can double recording capacity and is high quality; and is widely used, for example, for optical recording apparatuses for relatively thin, flat holograms for recording two-dimensional information, for volume holograms for recording much three-dimensional information such as stereoimages, or for reflective holograms.

The optical reproducing apparatus of the invention can efficiently reproduce recorded information on the optical recording medium which can double recording capacity and is high quality; and is widely used, for example, for optical reproducing apparatuses for relatively thin, flat holograms for recording two-dimensional information, for volume holograms for recording much three-dimensional information such as stereoimages, or for reflective holograms.

## Claims

1. An optical recording medium comprising:

a servo substrate formed so that at least servo information is capable of being detected;
a first recording layer in which information is recorded by holography;
a first top substrate;
a first gap layer $G_1$;
a first gap layer $G_2$;
a first filter layer;
a second recording layer;
a second top substrate;
a second gap layer $G_1$;
a second gap layer $G_2$; and
a second filter layer,
wherein the first recording layer, the first top substrate, the first gap layer $G_1$, the first gap layer $G_2$ and the first filter layer are arranged on one surface side of the servo substrate, and the second recording layer, the second top substrate, the second gap layer $G_1$, the second gap layer $G_2$, and the second filter layer are arranged on the other surface side of the servo substrate.

2. The optical recording medium according to claim 1, wherein a servo pit pattern is formed on at least one of one surface and the other surface of the servo substrate.

3. The optical recording medium according to one of claims 1 and 2, wherein the servo substrate comprises two or more substrates.

4. The optical recording medium according to any one of claims 1 to 3, which is used for an optical recording method where information light and reference light are applied onto the optical recording medium in such a way that the optical axis of the information light is collinear with that of the reference light.

5. A method for producing the optical recording medium of any one of claims 1 to 4, comprising:

forming a gap layer $G_1$ on each of one surface and the other surface of a servo substrate;
forming a filter layer on the gap layer $G_1$;
forming a gap layer $G_2$ on the filter layer;
forming a recording layer on the gap layer $G_2$ and
forming a top substrate on the recording layer.

6. The method for producing an optical recording medium according to claim 5, wherein the servo substrate comprises two or more substrates.

7. The method for producing an optical recording medium according to claim 6,
wherein the optical recording medium comprises a first optical recording medium and a second optical recording medium, and the first optical recording medium and the second optical recording medium each comprise a servo substrate formed so that at least servo information is capable of being detected, a recording layer in which information is recorded by holography, a top substrate, a gap layer $G_1$, a gap layer $G_2$, and a filter layer being arranged on one surface side of the servo substrate,
wherein the optical recording medium is formed by joining the other surfaces of the servo substrates of the first optical recording medium and the second optical recording medium.

8. An optical recording apparatus comprising:

a focal distance-detecting unit configured to apply servo light onto one side of the optical recording medium of any one of claims 1 to 4 and to detect a focal distance representing the distance between the focus of the servo light and a collective lens;
a focal distance-controlling unit configured to control the focal distances along an optical axis direction of information light and reference light based on the detected focal distance of the servo light;
an interference image-recording unit configured to create interference images by applying the information light

and the reference light to thereby record the interference images on a recording layer; and
a medium-reversing unit configured to reverse the optical recording medium upside down such that information is capable of being recorded by means of the interference image-recording unit on a recording layer on the side opposite to that of the recording layer on which the interference images have been recorded by the interference image-recording unit,

**9.** The optical recording apparatus according to claim 8, further comprising an interference image-reproducing unit configured to reproduce the recorded interference images by applying reproduction light onto the optical recording medium where information has been recorded by means of the interference image-recording unit.

**10.** An optical reproducing apparatus comprising:

a focal distance-detecting unit configured to apply servo light onto one side of the optical recording medium of any one of claims 1 to 4 and to detect a focal distance representing the distance between the focus of the servo light and a collective lens;
a focal distance-controlling unit configured to control the focal distance along an optical axis direction of reproduction light, the same as reference light used for recording based on the detected focal distance of the servo light;
an interference image-reproducing unit configured to reproduce recorded interference images by applying the reproduction light; and
a medium-reversing unit configured to reverse the optical recording medium upside down such that information is capable of being reproduced by means of the interference image-reproducing unit from a recording layer on the side opposite to that of the recording layer from which the interference images have been reproduced by the interference image-reproducing unit.

FIG. 1

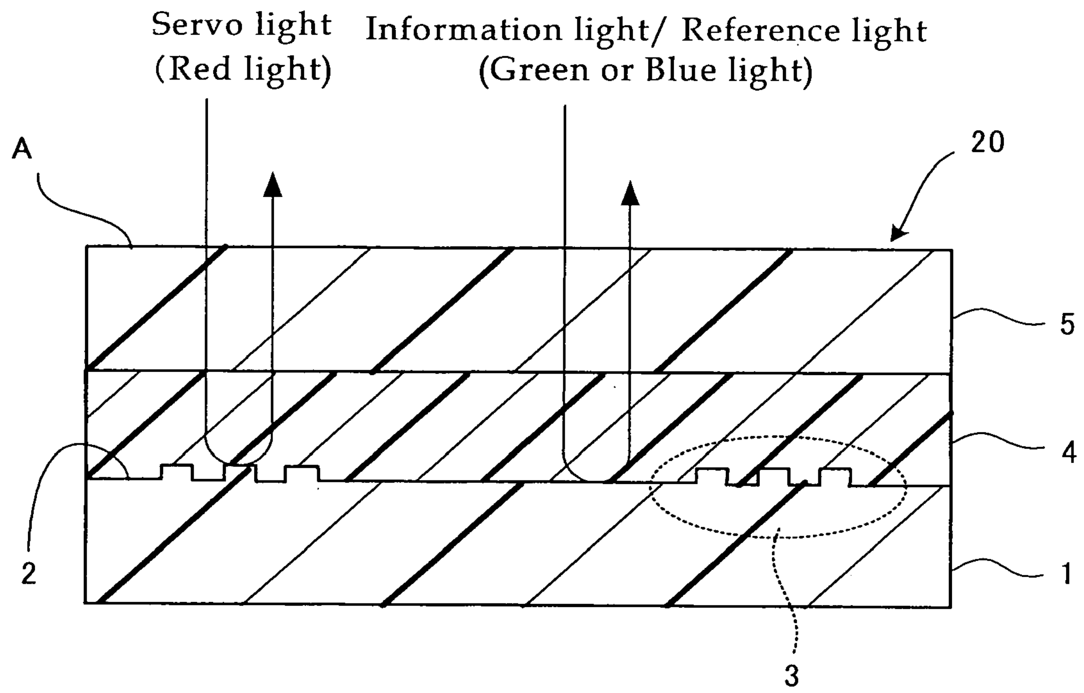
Servo light
(Red light)
Information light/ Reference light
(Green or Blue light)
A
20
5
4
2
1
3

FIG. 2

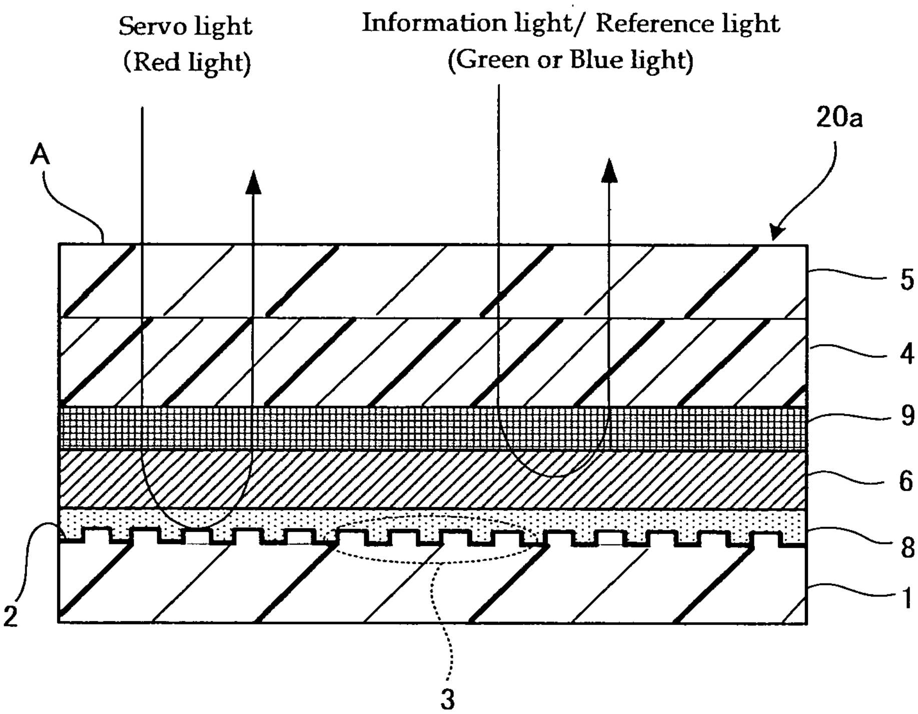
Servo light
(Red light)
Information light/ Reference light
(Green or Blue light)
20a
A
5
4
9
6
8
1
2
3

FIG. 3

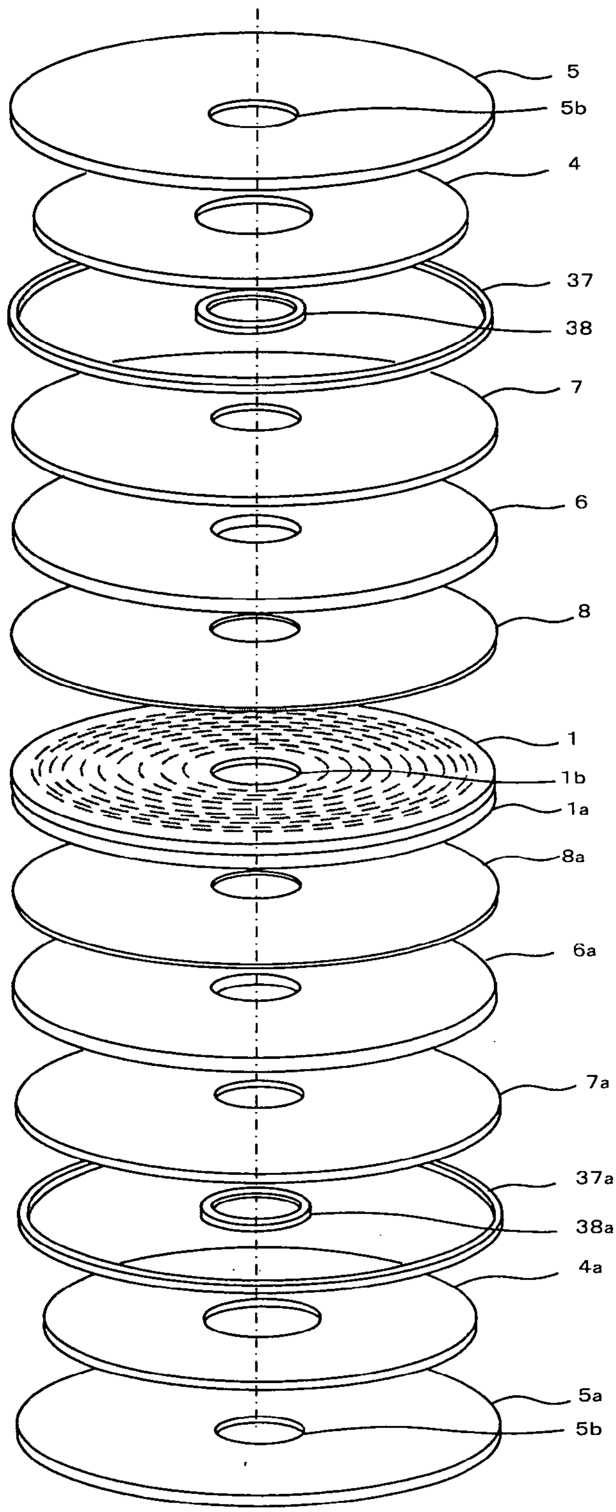

FIG. 4

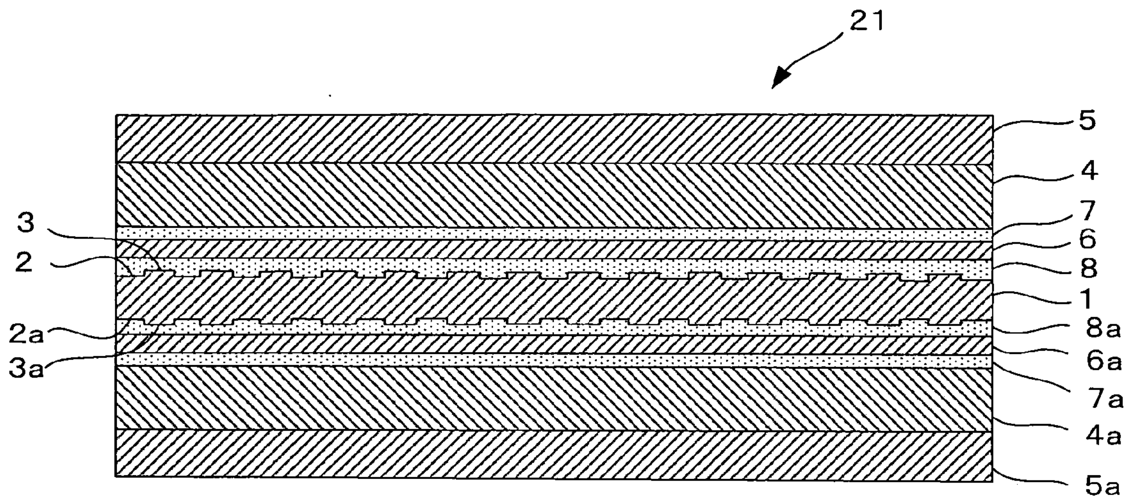


FIG. 5

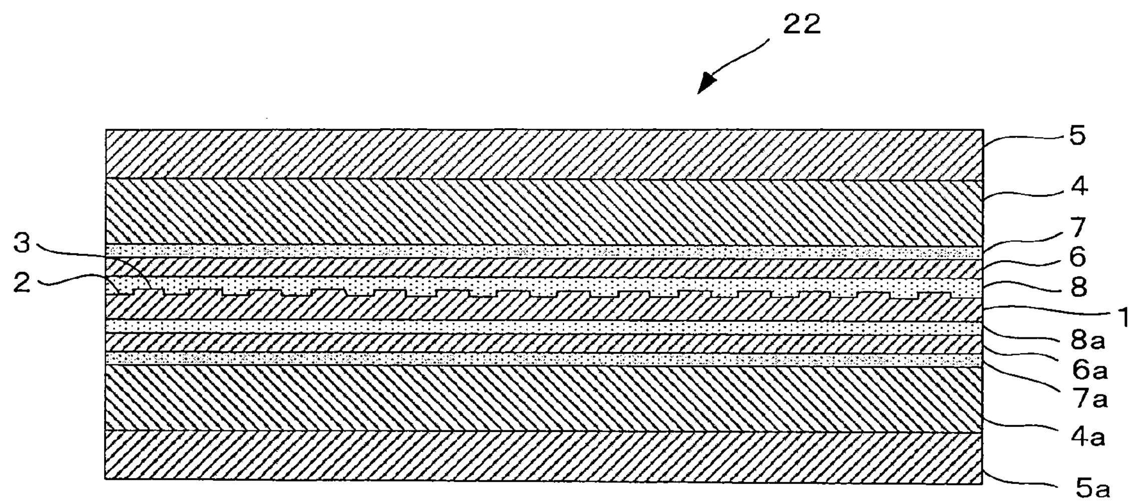

FIG. 6

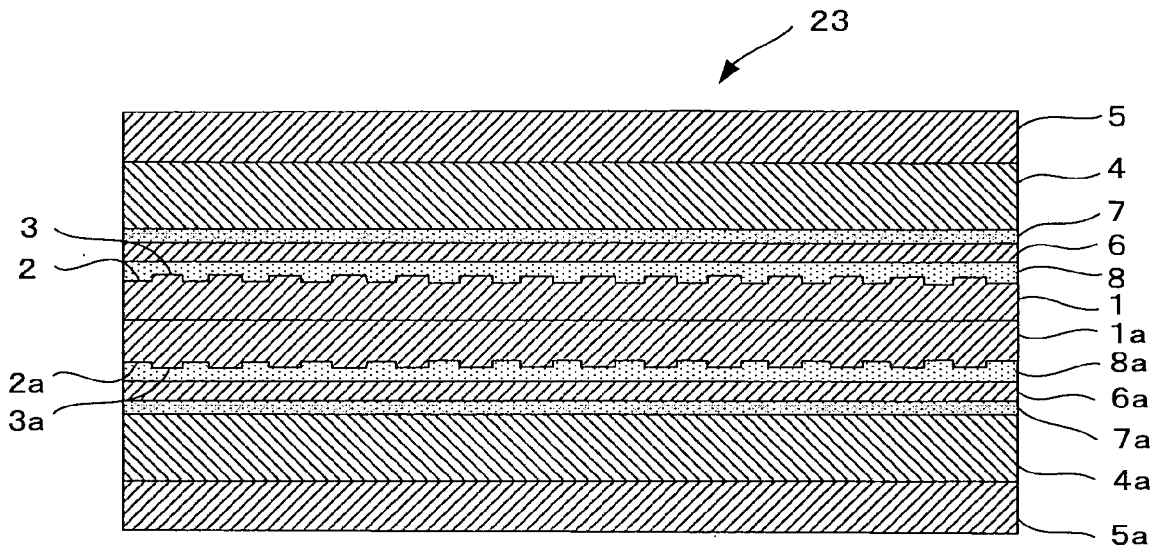
23
5
4
7
6
8
1
1a
8a
6a
7a
4a
5a
3
2
2a
3a

FIG. 7

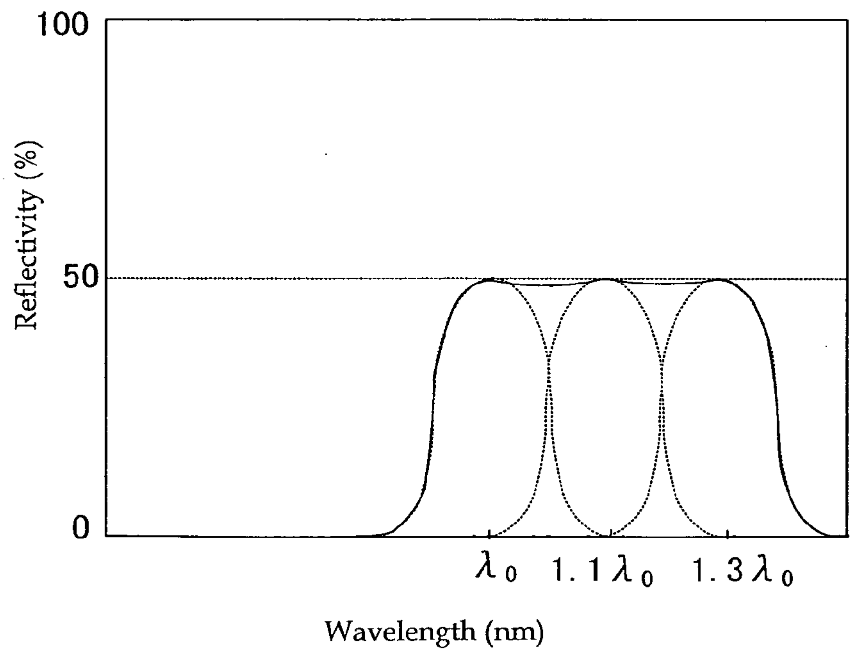
100
50
0
Reflectivity (%)
$\lambda_0$
$1.1\lambda_0$
$1.3\lambda_0$
Wavelength (nm)

FIG. 8

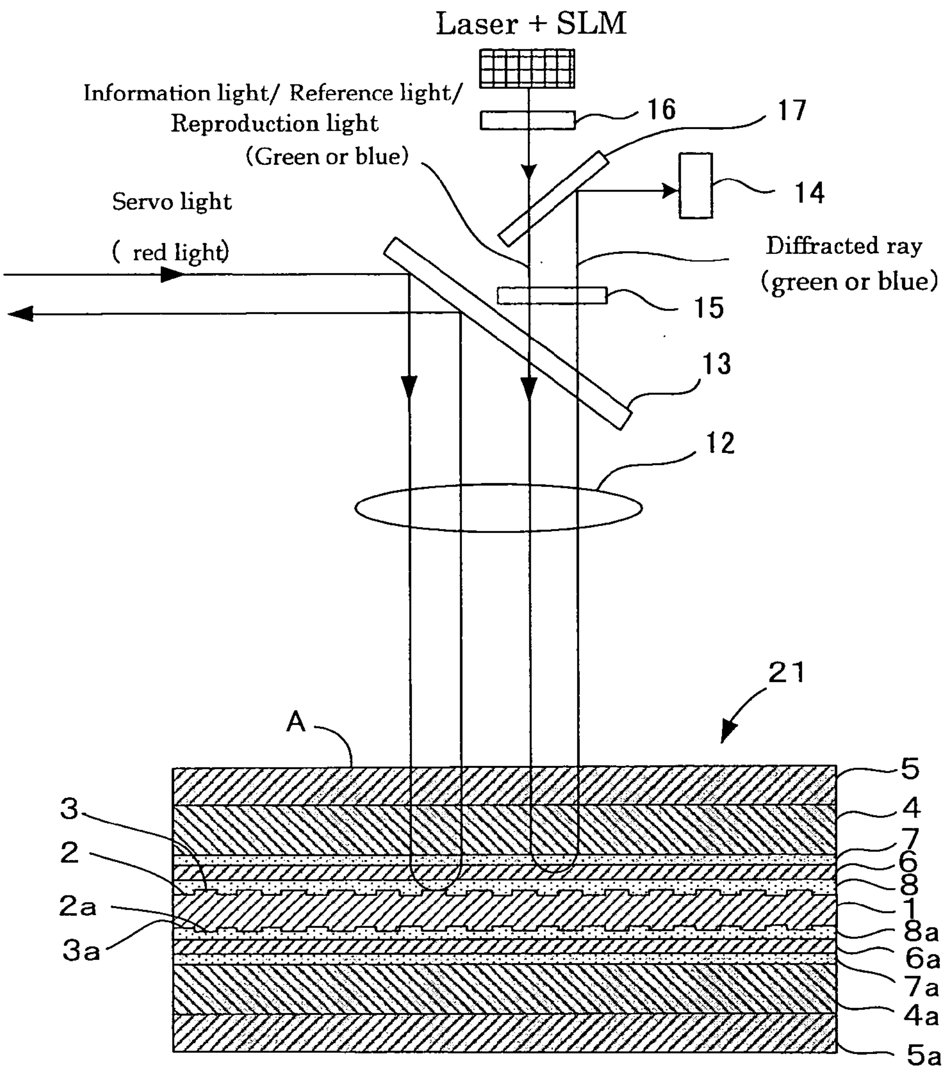
Laser + SLM
Information light/ Reference light/
Reproduction light
(Green or blue)
Servo light
( red light)
16
17
14
Diffracted ray
(green or blue)
15
13
12
21
A
3
2
2a
3a
5
4
7
6
8
1
8a
6a
7a
4a
5a

FIG. 9

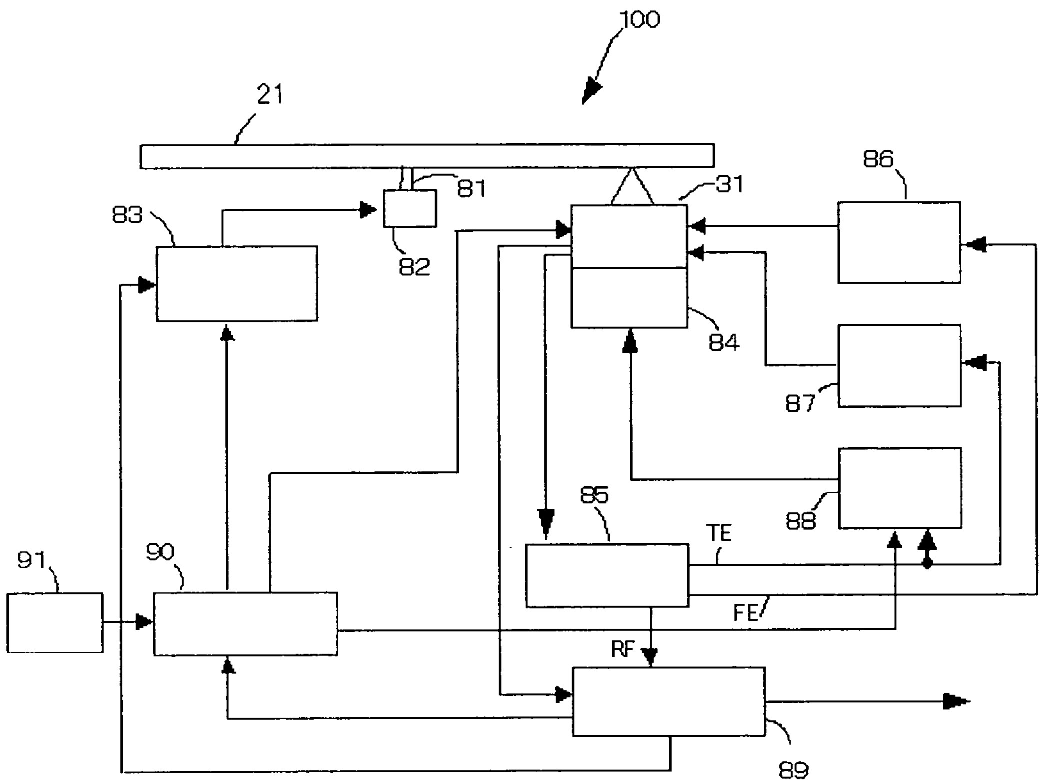

FIG. 10

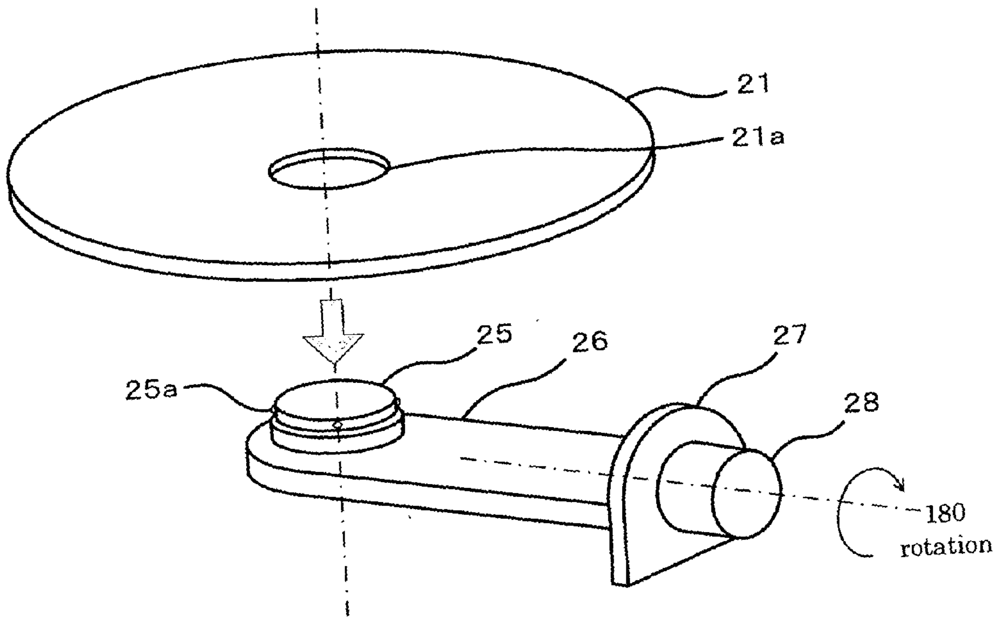
21
21a
25
26
27
25a
28
180
rotation

FIG. 11

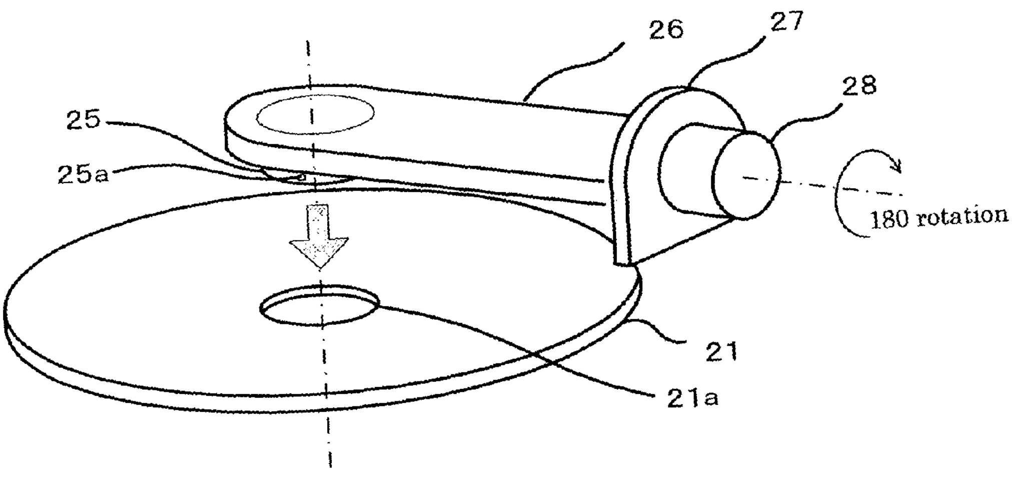
26
27
28
25
25a
180 rotation
21
21a

FIG. 12

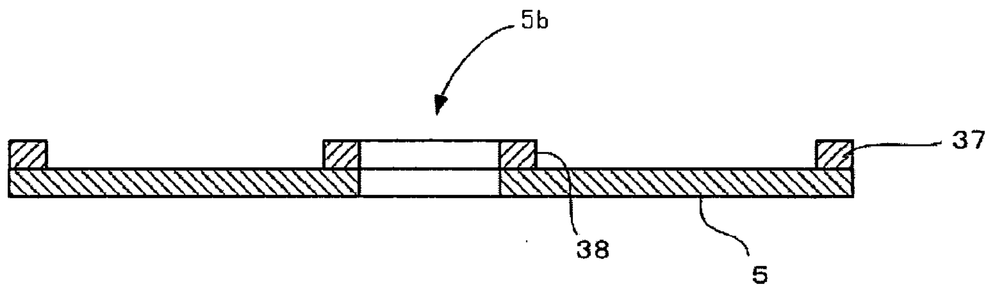


FIG. 13

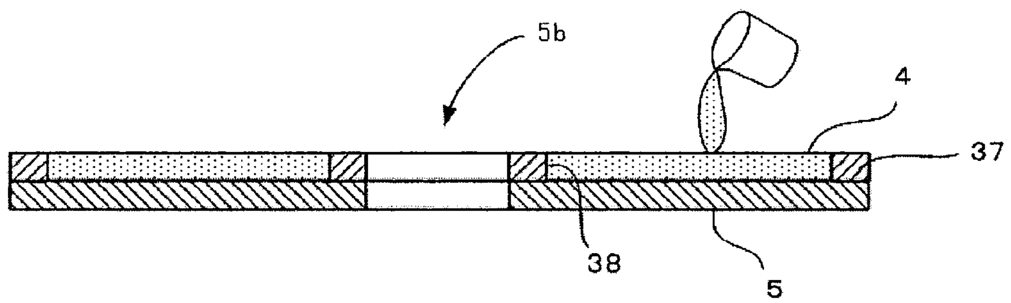


FIG. 14

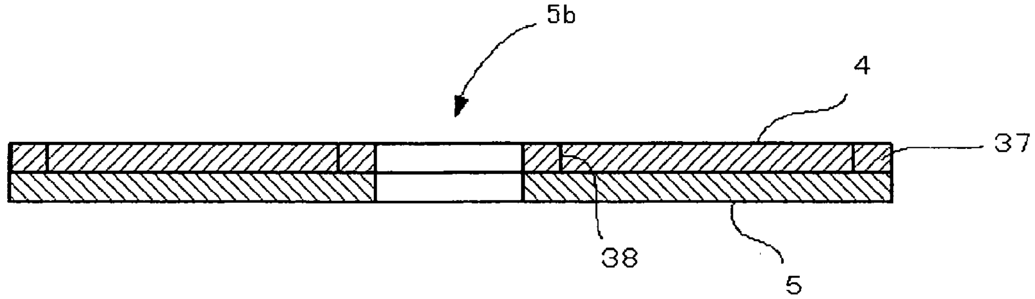

FIG. 15

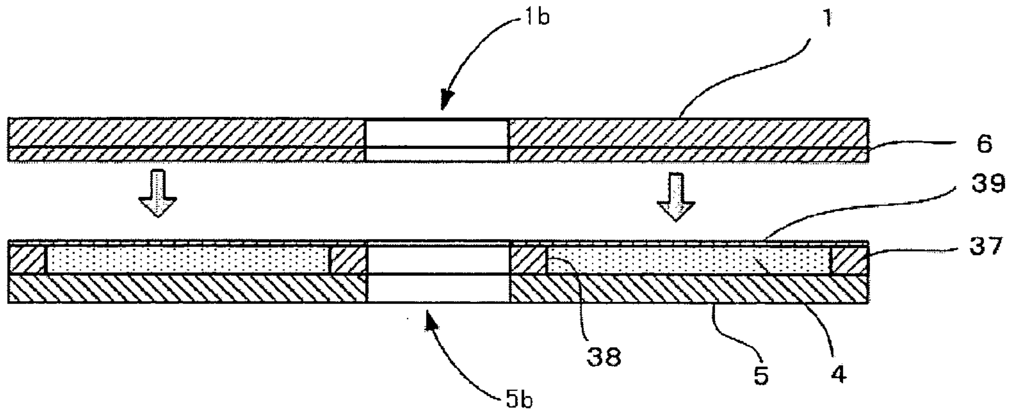


FIG. 16

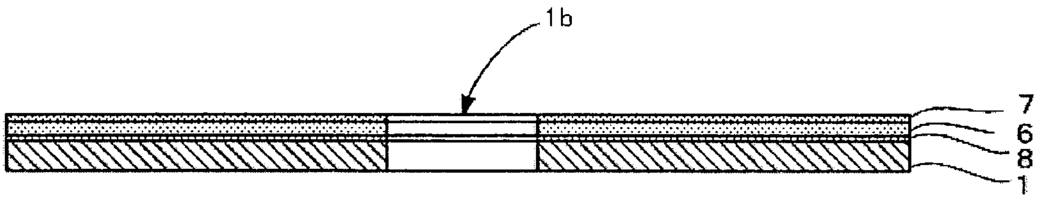


FIG. 17

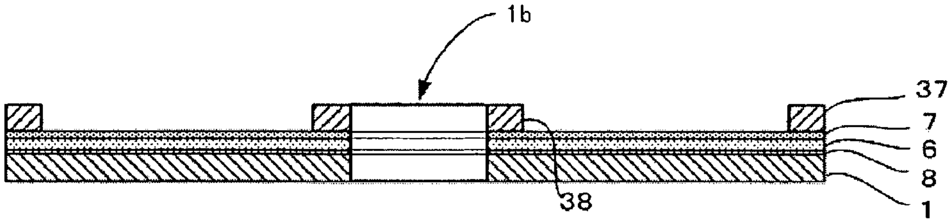

FIG. 18

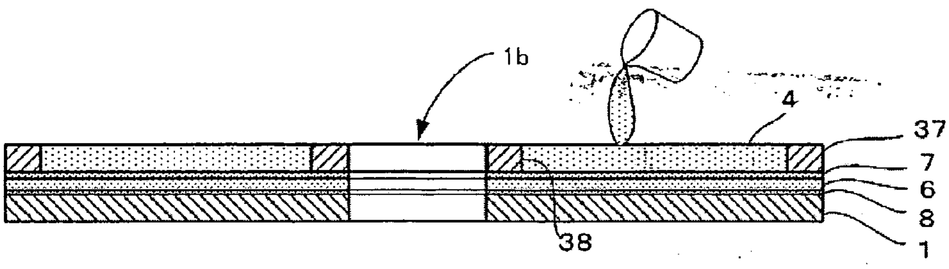


FIG. 19

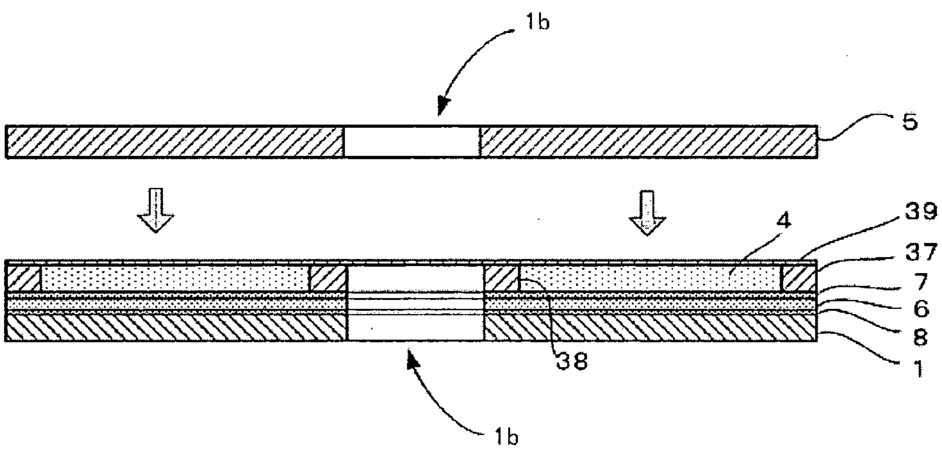

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002123949 A
- JP 11311936 A
- JP 2004265472 A
- JP 2004303319 A
- JP 2001147634 A
- US 5759721 A
- US 4942112 A
- US 4959284 A
- US 6221536 B
- WO 9744714 A
- WO 9713183 A
- WO 9926112 A
- JP 2880342 B
- JP 2873126 B
- JP 2849021 B
- JP 3057082 B
- JP 3161230 B
- JP 2001316416 A
- JP 2000275859 A
- JP 2004352081 A
- JP 47010537 A
- JP 58111942 A
- JP 58212844 A
- JP 59019945 A
- JP 59046646 A
- JP 59109055 A
- JP 63053544 A
- JP 3610466 B
- JP 4226187 B
- JP 48030492 B
- JP 48031255 B
- JP 48041572 B
- JP 48054965 B
- JP 50010726 B
- US 2719086 A
- US 3707375 A
- US 3754919 A
- US 4220711 A
- JP 11259946 A


### Non-patent literature cited in the description


- Photopolymer Handbook. Kogyo Chosakai Publishing Inc, 1989
- Photopolymer Technology. THE NIKKAN KOGYO SHIMBUN LTD, 1989
- *SPIE Journals and Proceedings,* 1997, vol. 3010, 354-372
- *SPIE Journals and Proceedings,* 1998, vol. 3291, 89-103
- *ISOM'04,* October 2004, 184-185